# EUROPEAN PATENT APPLICATION

(11) **EP 4 836 514 A1**
(43) Date of publication of application: **04.11.2026**
(21) Application number: 23962512.2
(22) Date of filing: 25.12.2023
(51) Int. Cl.: H04W 36/00

(54) **SENSING SERVICE EXECUTION METHOD, APPARATUSES, DEVICE, AND MEDIUM**

(71) Applicant: GUANGDONG OPPO MOBILE TELECOMMUNICATIONS CORP., LTD., Dongguan, Guangdong 523860 (CN)
(72) Inventor: YU, Xinlei, Dongguan, Guangdong 523860 (CN); LU, Qianxi, Dongguan, Guangdong 523860 (CN); LENG, Bingxue, Dongguan, Guangdong 523860 (CN); FU, Zhe, Dongguan, Guangdong 523860 (CN)
(74) Representative: Penza, Giancarlo
(86) International application number: PCT/CN2023/141523
(87) International publication number: WO 2025/137814

(57) **Abstract**

The present application relates to the field of sensing, and discloses a sensing service execution method, apparatuses, a device, and a medium. The method is executed by a first node. The method comprises: acquiring first information sent by a source sensing node and/or candidate sensing nodes, wherein the first information is used for determining whether to switch the source sensing node to a target sensing node, the target sensing node is all or some of nodes among the candidate sensing nodes, and the source sensing node and the target sensing node are used for executing a sensing service on a first sensing target. According to the method provided in the present application, the first node controls the sensing node to perform switching, so that the sensing target can be uniquely identified when switching between different sensing nodes is performed, thereby maintaining the continuity of the sensing service.

## Description

### TECHNICAL FIELD

The present application relates to the field of sensing, and in particular to a method and an apparatus for execution of sensing service, a device and a medium.

### BACKGROUND

Integrating wireless sensing with mobile communication to realize communication services with integrated sensing is one of newly proposed technologies by the Third Generation Partnership Project (3GPP). By use of higher frequency band, wider bandwidth, and larger-scale antenna arrays, the entire communication system functions as a sensor to achieve sensing with high precision and high resolution.

For the communication services with integrated sensing, a sensing target may be in constant motion during the execution of sensing services, and can be switched between different sensing nodes.

However, when the sensing target lacks signal transmission or reception capabilities and it moves between different sensing nodes, how to uniquely identify the sensing target among different sensing nodes and maintain the continuity of sensing service is an urgent problem.

### SUMMARY

Embodiments of the present application provide a method and an apparatus for execution of sensing service, a device and a medium. The technical solutions are provided as follows.

According to an aspect of the embodiments of the present application, there is provided a method for execution of sensing service, the method being performed by a first node and including the following operation.

First information is received by the first node from a source sensing node and/or candidate sensing nodes, where the first information is used to determine whether to switch the source sensing node to a target sensing node.

Herein, the target sensing node is all or part of the candidate sensing nodes, and the source sensing node and the target sensing node are configured to perform a sensing service on a first sensing target.

According to an aspect of the embodiments of the present application, there is provided a method for execution of sensing service, the method being performed by a source sensing node and including the following operation.

First information is sent by the source sensing node to a first node.

Herein, the first information is used to determine whether to switch the source sensing node to a target sensing node, the target sensing node is all or part of a candidate sensing nodes, and the source sensing node and the target sensing node are configured to perform a sensing service on a first sensing target.

According to an aspect of the embodiments of the present application, there is provided a method for execution of sensing service, the method being performed by candidate sensing nodes and including the following operation.

First information is sent by the candidate sensing nodes to a first node.

Herein, the first information is used to determine whether to switch a source sensing node to a target sensing node, the target sensing node is all or part of the candidate sensing nodes, and the source sensing node and the target sensing node are configured to perform a sensing service on the first sensing target.

According to an aspect of the embodiments of the present application, there is provided an apparatus of a first node, the apparatus including an obtaining module.

The obtaining module is configured to obtain first information from a source sensing node and/or candidate sensing nodes, where the first information is used to determine whether to switch the source sensing node to a target sensing node.

Herein, the target sensing node is all or part of the candidate sensing nodes, and the source sensing node and the target sensing node are configured to perform a sensing service on a first sensing target.

According to an aspect of the embodiments of the present application, there is provided an apparatus of a source sensing node, the apparatus including a first sending module.

The first sending module is configured to send first information to a first node.

Herein, the first information is used to determine whether to switch the source sensing node to a target sensing node, the target sensing node is all or part of a candidate sensing nodes, and the source sensing node and the target sensing node are configured to perform a sensing service on a first sensing target.

According to an aspect of the embodiments of the present application, there is provided an apparatus of candidate sensing nodes, the apparatus including a second sending module.

The second sending module is configured to send first information to a first node.

The first information is used to determine whether to switch a source sensing node to a target sensing node, the target sensing node is all or part of candidate sensing nodes, and the source sensing node and the target sensing node are configured to perform a sensing service on a first sensing target.

According to one aspect of the present application, there is provided a sensing device, including a processor, and a memory for storing a computer program, where the processor executes the computer program to implement the method for execution of sensing service as described above.

According to one aspect of the present application, there is provided a computer-readable storage medium having stored therein a computer program that, when executed by a processor, cause to implement the method for execution of sensing service as described above.

According to an aspect of the present application, there is provided a chip including programmable logic circuitry and/or program instructions, where the chip, when running, cause to implement the method for execution of sensing service as described above.

According to one aspect of the present application, there is provided a computer program product including computer instructions stored in a computer-readable storage medium, where a processor reads and executes the computer instructions from the computer-readable storage medium to implement the method for execution of sensing service as described above.

The technical solution provided by the embodiments of the present application can achieve the following beneficial effects.

By obtaining first information sent by a source sensing node and/or candidate sensing nodes, the first node determines whether to switch the source sensing node to a target sensing node based on the first information, where the target sensing node is all or part of the candidate sensing nodes, and the source sensing node and the target sensing node are used to perform a sensing service on a sensing target. When the sensing target moves between the source sensing node and the candidate sensing nodes, the first node performs reasonable switching of sensing node during the movement of the sensing target, so as to ensure that the sensing target can be uniquely identified by each sensing node, thereby ensuring the continuity of the sensing service.

### BRIEF DESCRIPTION OF THE DRAWINGS

In order to more clearly explain the technical solution in the embodiments of the present application, the following will briefly introduce accompanying drawings that need to be used in the description of the embodiments. Apparently, the accompanying drawings in the following description are only some embodiments of the present application, and those with ordinary skill in the art can obtain other drawings from these drawings without exerting creative efforts.
FIG. 1 illustrates a schematic diagram of architecture of a communication system provided by an exemplary embodiment of the present application.
FIG. 2 illustrates a schematic diagram of a 5th Generation Mobile Communication Technology (5G) system architecture provided by an exemplary embodiment of the present application.
FIG. 3 illustrates a schematic diagram of device-free/device-based sensing provided by an embodiment of the present application.
FIG. 4 is a schematic diagram of wireless sensing modes provided by an embodiment of the present application.
FIG. 5 is a flowchart of Application Function (AF)-triggered sensing provided by an exemplary embodiment of the present Application.
FIG. 6 illustrates a flowchart of UE-triggered sensing provided by an exemplary embodiment of the present application.
FIG. 7 illustrates a flowchart of a Sensing Function (SF)-controlled UE- to -UE sensing mode provided by an exemplary embodiment of the present application.
FIG. 8 illustrates a schematic diagram of coverage scenarios of a terminal device provided by an exemplary embodiment of the present application.
FIG. 9 illustrates a flowchart of a UE-autonomous sensing service provided by an exemplary embodiment of the present application.
FIG. 10 illustrates a flowchart of terminal-autonomous UE-to-UE sensing air interface provided by an exemplary embodiment of the present application.
FIG. 11 illustrates a flowchart of a method for execution of sensing service provided by an exemplary embodiment of the present application.
FIG. 12 illustrates a flowchart of a method for execution of sensing service provided by an exemplary embodiment of the present application.
FIG. 13 illustrates a flowchart of a method for execution of sensing service provided by an exemplary embodiment of the present application.
FIG. 14 illustrates a flowchart of a method for execution of sensing service provided by an exemplary embodiment of the present application.
FIG. 15 illustrates a flowchart of a method for execution of sensing service provided by an exemplary embodiment of the present application.
FIG. 16 illustrates a flowchart of a method for execution of sensing service provided by an exemplary embodiment of the present application.
FIG. 17 illustrates a flowchart of a method for execution of sensing service provided by an exemplary embodiment of the present application.
FIG. 18 illustrates a flowchart of a method for execution of sensing service provided by an exemplary embodiment of the present application.
FIG. 19 illustrates a structural block diagram of an apparatus of a first node provided by an exemplary embodiment of the present application.
FIG. 20 is a structural block diagram of an apparatus of a source sensing node provided by an embodiment of the present application.
FIG. 21 is a structural block diagram of an apparatus of a candidate sensing node provided by an embodiment of the present application.
FIG. 22 illustrates a structural block diagram of an apparatus of a sensing device provided by an exemplary embodiment of the present application.

### DETAILED DESCRIPTION

In order to make the objectives, technical solutions, and advantages of the present application more clear, embodiments of the present application will be described in further detail below with reference to the accompanying drawings. Exemplary embodiments will be described in detail herein, with examples illustrated in the accompanying drawings. The following description, when involving the accompanying drawings, shall be construed such that unless otherwise indicated, the same numerals in different drawings denote the same or similar elements. The implementations described in the following exemplary embodiments do not represent all implementations consistent with the embodiments of the present application. Rather, they are merely examples of devices and methods consistent with some aspects of the embodiments of the present application as detailed in the appended claims.

The terms used in the present application are intended solely for the purpose of describing particular embodiments, and are not intended to limit the present application. The singular forms "a/an", "said" and "the" as used in the present application and the appended claims are also intended to include the plural forms, unless being indicated in the context otherwise. It should also be understood that the term "and/or" herein refers to and includes any or all possible combinations of one or more associated listed items.

It is to be understood that although the terms first, second, third, and the like may be used in the present application to describe various information, such information should not be limited to these terms. These terms are used only to distinguish information of the same type from each other. For example, without departing from the scope of the present application, the first information may also be referred to as the second information, and similarly the second information may also be referred to as the first information. Depending on the context, the word "if" as used herein may be interpreted as "at the time of" or "when" or "responsive to determination".

It should also be understood that in various embodiments of the present application, the size of the sequence number of the above-described processes does not mean the order of execution, and the order of execution of various processes should be determined by their functions and internal logics, and should not constitute any limitation on the implementation of the embodiments of the present application.

Before introducing the technical solutions of the present application, some background technical knowledge related to the present application will be first described. The following related technologies may be combined in any manner with the technical solutions of the embodiments of the present application, and all such combinations shall fall within the protection scope of the embodiments of the present application. Embodiments of the present application include at least some of the following.

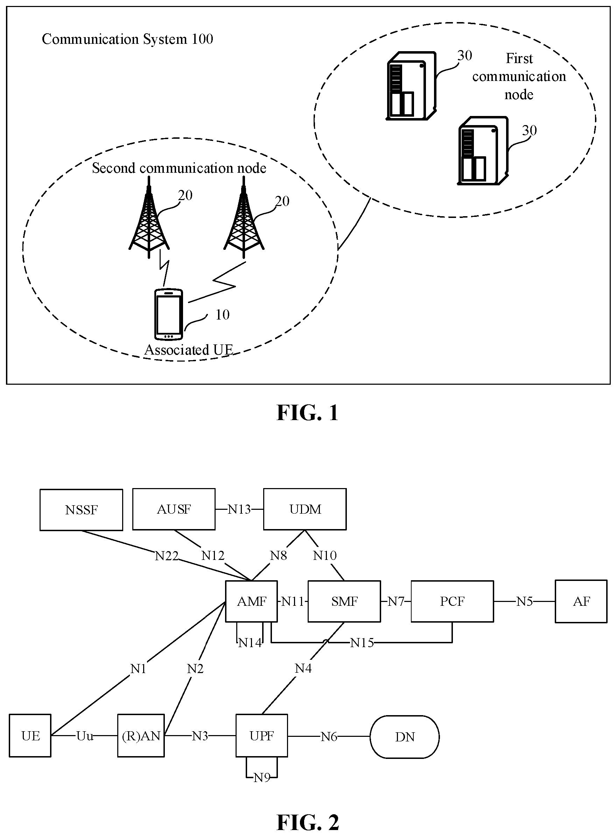

FIG. 1 illustrates a schematic diagram of architecture of a communication system provided by an exemplary embodiment of the present application. The communication system 100 may include a terminal device 10, an access network device 20 and a core network element 30.

The terminal device 10 may refer to user equipment (UE), an access terminal, a user unit, a user station, a mobile station, a mobile platform, a remote station, a remote terminal, a mobile device, a wireless communication device, a user agent, or a user device. In some embodiments, the terminal device 10 may also be a cellular phone, a cordless phone, a session initiation protocol (SIP) telephone, a wireless local loop (WLL) station, a personal digital assistant (PDA), a handhold device with wireless communication function, a computing device or other processing device connected to a wireless modem, an in-vehicle device, a wearable device, a terminal device in the 5th Generation System (5GS), or a terminal device in future evolved Pub1ic Land Mobi1e Network (PLMN), etc., which are not limited in the embodiments of the present application. For convenience of description, the above-mentioned devices are collectively referred to as terminal devices. There are usually multiple terminal devices 10, and one or more terminal devices 10 may be distributed in a cell(s) managed by each access network device 20. The terminal device may also be referred to as a terminal or a UE for short, and those skilled in the art may understand the meaning thereof. In the embodiments of the present application, the terminal device refers to a sensing target that does not have the capability of signal transmission or reception.

The access network device 20 is a device deployed in an access network to provide wireless communication functions for the terminal devices 10. The access network device 20 may include various forms of macro base stations, micro base stations, relay stations, and the like. In systems employing different wireless access technologies, devices having functions of the access network device may have different names. For example, in 5G NR system, it may be referred to as the Next Generation Node B (gNodeB) or Next Generation Node B (gNB). As communication technologies evolve, the name "access network device" may change. For convenience of description, in the embodiments of the present application, the access network device 20 refers to a source sensing node and candidate sensing nodes that provide sensing services for a sensing target.

In some embodiments, a communication relationship may be established between the terminal device 10 and the core network element 30 via the access network device 20. Exemplarily, in a Long Term Evolution (LTE) system, the access network device 20 may be Evolved Universal Terrestrial Radio Access Network (EUTRAN) or one or more eNodeBs in EUTRAN. In a 5G New Radio (NR) system, the access network device 20 may be a Radio Access Network (RAN) or one or more gNBs in the RAN.

The core network element 30 is a network element deployed in the core network. The main functions of the core network element 30 include providing user connectivity, user management and service bearer, and serving as a bearer network to provide an interface to external networks. For example, the core network element in the 5G NR system may include network elements such as SF, AMF entity, User Plane Function (UPF) entity, and Session Management Function (SMF) entity. In the embodiments of the present application, the "network device" refers to a sensing server node, i.e., a first node, unless otherwise specified.

In some embodiments, the access network device 20 and the core network element 30 communicate with each other through a certain air interface technology, such as the NG interface in the 5G NR system. The access network device 20 and the terminal device 10 communicate with each other through a certain air interface technology, such as the Uu interface.

The term "5G NR system" in the embodiments of the present application may also be referred to as a 5G system or an NR system, and those skilled in the art may understand the meaning thereof. The technical solutions described in the embodiments of the present application may be applicable to an LTE system, a 5G NR system, an evolved system (e.g., a Beyond 5G (B5G) system and a 6th Generation (6G) system) subsequent to the 5G NR system, and other communication systems such as a Narrow Band Internet of Things (NB-IoT) system, which are not limited thereto in present application.

In the embodiments of the present application, the network device may provide services for a cell, and the terminal device communicates with the network device through transmission resources (for example, frequency domain resources or spectrum resources) on carriers used by the cell. The cell may be a cell corresponding to an access network device (for example, a base station), and the cell may belong to a macro base station or a base station corresponding to a Small cell. Here, the small cell may include a Metro cell, a Micro cell, a Pico cell, a Femto cell, etc. These small cells have the characteristics of small coverage and low transmit power, and are suitable for providing high-speed data transmission services.

Before introducing the technical solutions of the present application, some related technical knowledge of the present application will be first described. The following related technologies may be combined in any manner with the technical solutions of the embodiments of the present application, and all such combinations shall fall within the protection scope of the embodiments of the present application. Embodiments of the present disclosure include at least some of the following contents.

FIG. 2 illustrates a diagram of architecture of a 5G network system. In FIG. 2, UE performs access stratum connection with AN via a Uu interface to exchange access stratum messages and perform wireless data transmission, and the UE performs non-access layer (NAS) connection with AMF via an N1 interface to exchange NAS messages. AMF is a mobility management function in the core network device, and SMF is a session management function in the core network device. In addition to mobility management for the UE, the AMF is also responsible for forwarding session management related messages between the UE and SMF. Policy Control Function (PCF) is a policy management function in the core network device, responsible for formulating policies related to mobility management, session management, charging and so on for the UE. UPF is a user plane function in the core network device, which performs data transmission with an external data network via an N6 interface and the Access Network (AN) via an N3 interface.

Current cellular networks, including 5G networks, are only used for communication. However, in fact, radio electromagnetic wave signals used in cellular networks may be used not only for wireless data transmission and communication, but also have environment sensing capabilities, such as recognition of the motion or gesture of users, breath monitoring of users, measurement of terminals' moving speed, environmental imaging, weather monitoring, etc. Therefore, it may be considered that the future cellular networks are not only used for communication and data transmission, but also for acquisition of sensing information. Table 1 lists some of different levels of sensing information.

**Table 1: Different levels of sensing information**

| | Different levels of sensing information | Content of sensing information |
|---|---|---|
| 1 | Received signal or original channel information | Complex results of received signal or channel response, amplitude/phase, I/Q components and their related operation results |
| 2 | Basic measurements | Latency, doppler shift, angle, signal strength, and their multi-dimensional combined representations |
| 3 | Basic attributes or statuses of sensing target | Distance, speed, orientation, acceleration, etc. |
| 4 | Advanced attributes or statuses of sensing target | Existence of target, spatial location, trajectory, action, expression, vital signs, quantity, imaging results, weather, air quality, shape, material, composition, etc. |

### 1. Definition of wireless sensing

In integrated sensing and communication (ISAC), sensing capabilities focus on wireless signal sensing, that is, by analyzing the direct, reflected, and scattered signals of radio waves, to obtain sensing information about environment and/or information of target objects(e.g., attributes and status) in the environment, and to realize functions such as location, ranging, speed measurement, imaging, detection, recognition, environment reconstruction, so as to achieve sensing and exploration of the physical world.
- Passive sensing: A sensing node (network side or terminal) performs sensing by acquiring electromagnetic waves (e.g., terahertz waves) emitted by the target object or reflected from sources other than the sensing node and the target object. Examples include passive imaging sensing technologies such as radio astronomy.
- Active sensing: A transmitting sensing node (network side or terminal) transmits electromagnetic waves, reflected by the target object as echo, and a receiving sensing node receives the echo for sensing. Examples include active radar-like sensing technologies that transmit detection signals. The node receiving the reflected wave is not necessarily the node transmitting the detection signal. That is, multiple nodes on the sensing side can realize active sensing through some form of joint processing.

### 2. Sensing scenarios and use cases

In smart transportation scenarios, using ISAC base stations or inter-base station cooperation to realize road environment sensing enables effective construction of high-precision maps, providing over-the-horizon assistance for the safe operation of autonomous vehicles. Using ISAC base stations or inter-base station cooperation enables omnidirectional, all-weather, uninterrupted detection of the trajectory and speed of moving vehicles, with sensing information uploaded to a processing center, comprehensively improving the intelligent sensing capability of expressway operation status and providing data support for road supervision. ISAC base stations enable to realize sensing of railway track environment, supporting all-weather foreign object intrusion detection around high-speed railways.

In smart low-altitude scenarios, using ISAC base stations or inter-base-station cooperation to perform comprehensive multi-angle sensing of airspace and providing sensing results to drones can provide redundancy for obstacle avoidance and warnings, and thus improving the success rate of obstacle avoidance by drones. Using ISAC base stations or inter-base-station cooperation to perform full airspace sensing, locate and track drones intruding into a regulated area enables to achieve monitoring of drone intrusion in fixed areas.

In smart living scenarios, based on the working modes such as base station-terminal cooperation, terminal self-transmission/self-reception, or inter-terminal cooperation, respiration monitoring, fitness monitoring, gesture/pose recognition, etc. is performed by sensing changes in wireless channels. Based on ISAC base stations or inter-base station cooperation, signal link attenuation in communication links is measured, and corresponding weather indicators are derived using the relationship between the signal link attenuation and weather parameters, thereby realizing weather monitoring.

In smart network scenarios, information such as density and location of idle UEs in a cell is acquired based on ISAC base stations or inter-base station cooperation, assisting in base station energy saving and resource scheduling optimization within the cell.

In smart transportation scenarios, using ISAC base stations or inter-base-station cooperation to continuously track vehicles enables real-time dynamic monitoring of vehicle status. For vehicles with wireless communication capabilities, the sensing precision of vehicles can be enhanced through cooperative vehicle sensing.

In smart low-altitude scenarios, based on ISAC base stations or inter-base station cooperation, UAVs intruding into regulated areas are located and tracked to take actions to expel "black-flight" UAVs. For networked UAVs with wireless communication capabilities, flight status of UAVs, obstacles along the flight route, etc. can also be identified through UAV cooperative sensing, to provide assisted flight services.

In smart living scenarios, by carrying terminals with communication capabilities, respiration monitoring, fitness monitoring, gesture/pose recognition are performed on specific individuals based on base station-terminal cooperation, terminal self-transmission/self-reception, or inter-terminal cooperation, to achieve accurate real-time dynamic monitoring.

In smart network scenarios, ISAC technology is used to assist in improving beam management and channel estimation accuracy, enhancing the timeliness of terminal beam tracking, improving channel estimation accuracy, and reducing feedback overhead.

Per-Area/Object Sensing: according to whether sensing requirements focus on a specified sensing area or a specified sensing target, 5G-A ISAC scenarios can be divided into Per-Area ISAC scenarios and Per-Object ISAC scenarios. Sensing requirements are ubiquitous across various industries. Scenarios that require efficient sensing of the real-time status of roads, vehicles, and people over factories, roads, low-altitude areas, cities, or even larger spatial and temporal ranges are referred to as Per-Area ISAC scenarios. Scenarios that use ISAC technologies for continuous sensing and tacking of a sensed object to obtain dynamic monitoring of the object's status are referred to as Per-Object ISAC scenarios.

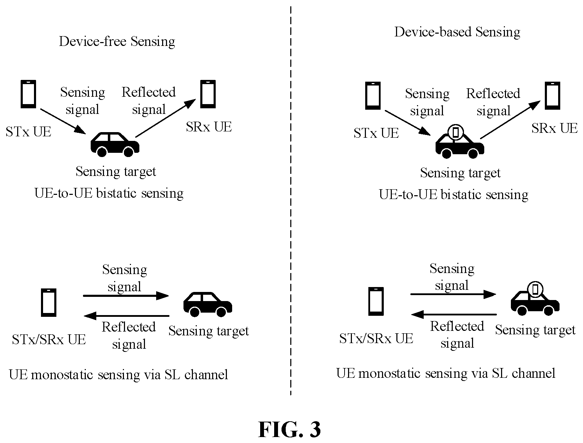

Device-based/free sensing: as shown in Figure 3, based on whether sensing targets have capabilities of signal transmission or reception, ISAC scenarios can be divided into device-based ISAC scenarios and device-free ISAC scenarios. For example, in flight path management and base station-terminal beam management, the sensing targets (drones and terminals) are user devices with signal transmission or reception capabilities, belonging to device-based ISAC scenarios. In weather monitoring and respiration monitoring, the sensing targets (rainfall and humans) are targets without signal transmission or reception capabilities, belonging to device-free ISAC scenarios.

### 3. Wireless sensing mode

By addition of a Sensing Function (SF) network element and corresponding procedures, sensing capabilities are supported in 3GPP network. An application sends a sensing request for a sensing target to a core network device in the 3GPP network, the core network device selects an appropriate access network device or assisted UE (associated UE) via SF or AMF, triggers the capability to perform sensing-related wireless measurements, initiates the measurement of sensing information, and generates sensing results.

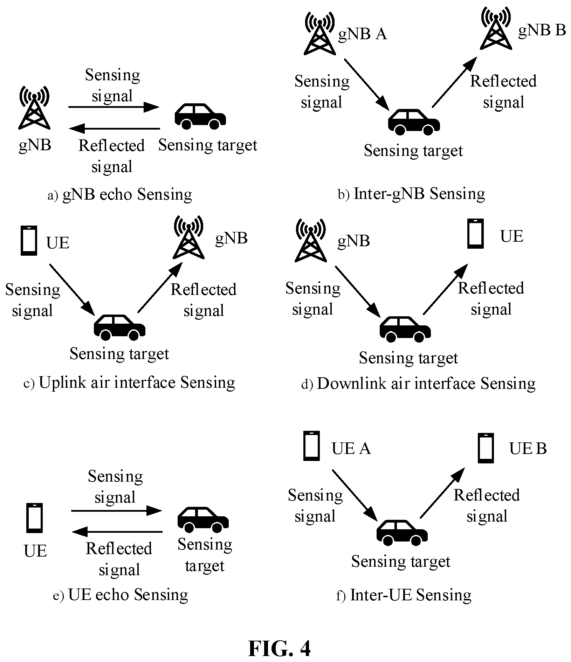

For sensing, there are multiple main wireless sensing modes in integrated sensing and communication. FIG. 4 illustrates six possible modes for wireless sensing.
a) Base station echo sensing (gNB self-transmission and self-reception sensing): gNB transmits sensing signals and receives echo signals;
b) Inter-base station sensing (gNB-to-gNB sensing): gNB B receives sensing signals transmitted by gNB A;
c) Uplink air interface sensing (UE-to-gNB sensing): gNB receives sensing signals transmitted by the UE;
d) Downlink air interface sensing (gNB-to-UE sensing): UE receives sensing signals transmitted by the gNB;
e) Terminal echo Sensing (UE Spontaneous Self-Receiving Sensing): UE transmits sensing signals and receives echo signals;
f) Inter-terminal sensing (UE-to-UE sensing): UE B receives sensing signals transmitted by UE A.

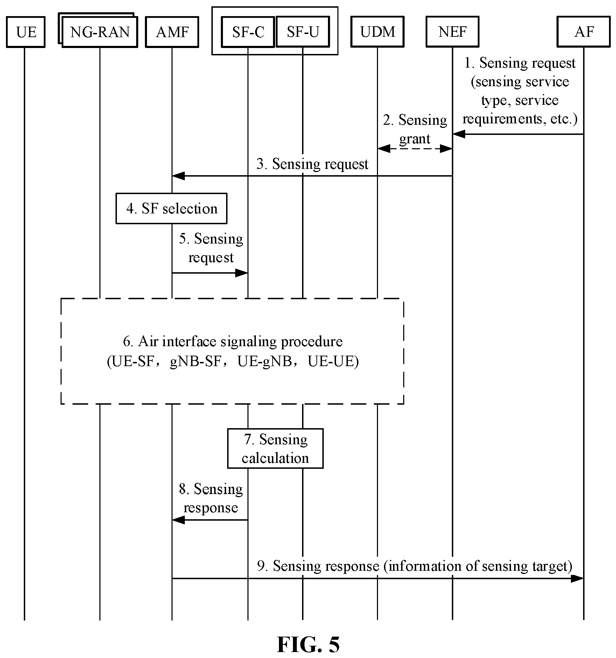

FIG. 5 illustrates a possible flowchart of controlling an access network device or UE to perform sensing operations. In step 1, a sensing request is triggered by AF, so it is referred to as an AF-triggered sensing procedure. The sensing request belongs to Mobile Terminated-Sensing Request (MT-SR). In addition to the MT-SR, the sensing request also includes a Mobile Originated-Sensing Request (MO-SR) as illustrated in FIG. 4, and possibly a Network Induced-Sensing Request (NI-SR) triggered by an internal network element.

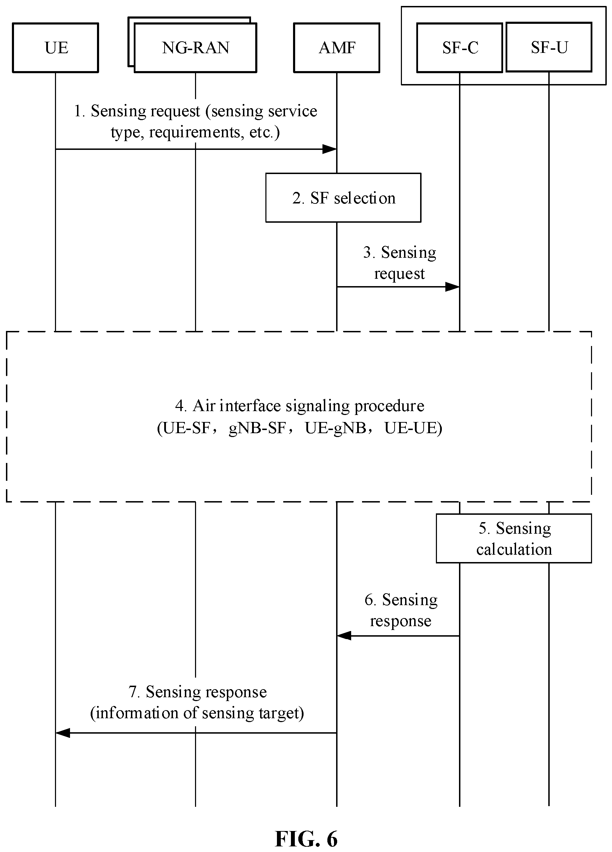

Step 6 in FIG. 5 and step 4 in FIG. 6 are air interface sensing signaling procedures. The air interface sensing signaling procedures can be divided, based on the interacting network elements, into different types: SF-gNB signaling interaction, SF-UE signaling interaction, gNB-UE signaling interaction, and UE-UE signaling interaction. Since different sensing modes involve different types of sensing nodes (UE/gNB), the required air interface signaling procedures also differ for each sensing mode, as illustrated in Table 2.

**Table 2: Air interface signaling procedures corresponding to different sensing modes**

| Sensing mode | gNB sensing | | UE-gNB sensing | | UE sensing | |
|---|---|---|---|---|---|---|
| | gNB self-transmission and self-reception | gNB-to-gNB | UE-to-gNB | gNB-to-UE | UE self-transmission and self-reception | UE-to-UE |
| SF-gNB | √ | √ | √ | √ | √ | √ |
| SF-UE | × | × | √ | √ | √ | √ |
| gNB-UE | × | × | √ | √ | √ | √ |
| UE-UE | × | × | × | × | √ | √ |

The following introduces the air interface sensing signaling procedure by taking UE sensing mode (i.e., UE-to-UE sensing and UE self-transmission and self-reception) as an example.

The basic process design for the UE sensing mode (i.e. UE-to-UE sensing, UE self-transmission and self-reception) needs to consider different coverage scenarios, including: In Coverage (IC) and Out Of Coverage (OOC) scenarios.

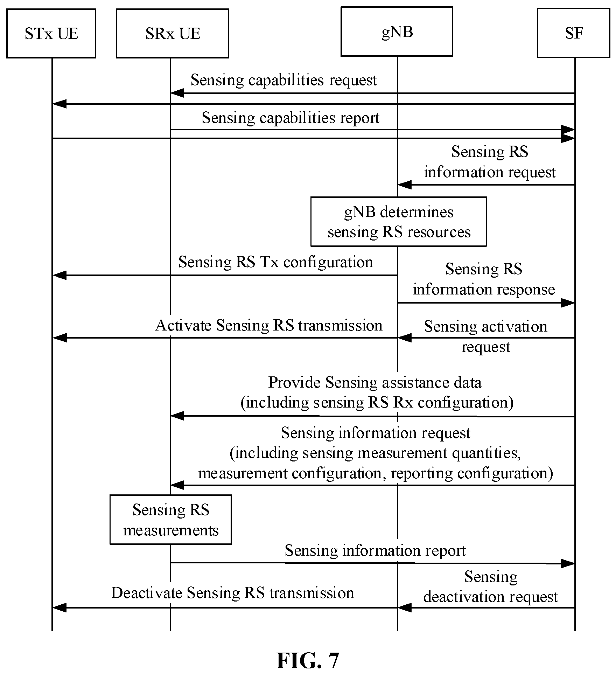

FIG. 7 is an air interface sensing signaling procedure of an SF-controlled UE-to-UE sensing mode. For other sensing modes involving UE, the air interface sensing signaling procedures are similar, requiring only appropriate modifications on this basis. For example, for UE self-transmission and self-reception sensing, Sensing Transmitting UE (STx UE) and Sensing Receiving UE (SRx UE) are the same terminal; for UE-to-gNB sensing mode, gNB replaces the SRx UE; and for the gNB-to-UE sensing mode, the gNB replaces the STx UE.

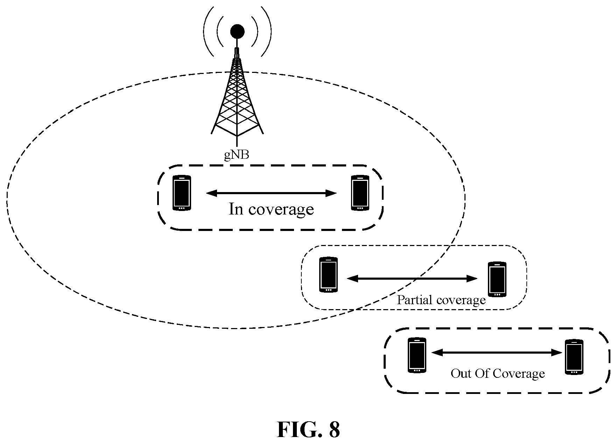

In addition, as illustrated in FIG. 8, for UE sensing mode (i.e., UE-to-UE sensing, UE self-transmission and self-reception sensing), the sensing procedure also needs to consider the OOC scenario.

For the OOC scenario, similar to Sidelink positioning, because the terminal device cannot obtain network coverage, the core network elements such as the SF cannot participate in the UE sensing procedure, and the sensing procedure described in FIG. 5 is not applicable. In this case, it is necessary to select some terminal devices with strong capabilities, allowing such terminals to partially undertake some of the tasks of the SF in under the OOC scenario. Therefore, in addition to the sensing transmitting terminal and the sensing receiving terminal, a terminal role of Sensing Server/Management UE also needs to be defined.

Thus, the UE sensing requires consideration of the following different terminal roles:
- Sensing transmitting UE: in UE sensing, responsible for transmitting sensing reference signals.
- Sensing receiving UE: in UE sensing, responsible for receiving and measuring sensing reference signals and obtaining sensing measurement quantities.
- Sensing Server UE (SS UE): in UE sensing, a logical node that undertakes some of SF functions under the OOC scenario, such as processing sensing measurement quantities. It may be one of the sensing transmitting UE or sensing receiving UE, or it may be independent.

In particular, for UE self-transmission and self-reception sensing, the sensing transmitting UE and the sensing receiving UE are the same terminal.

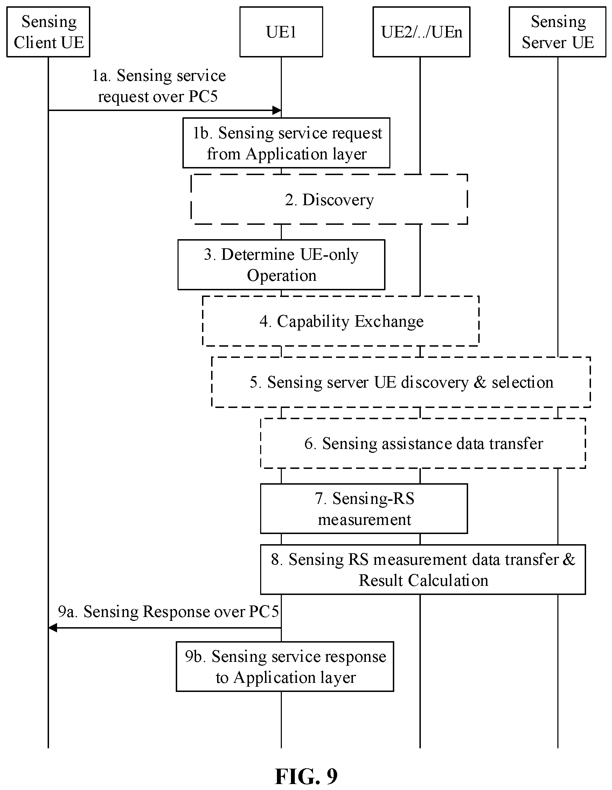

FIG. 9 is a flowchart of a complete UE-autonomous sensing service involving only UE, mainly for OOC scenario or scenarios where the current network does not support sensing services.

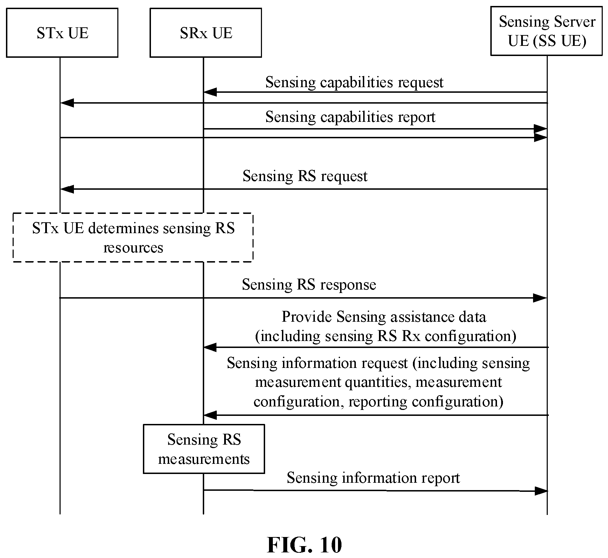

Steps 4-8 in FIG. 9 belong to an air interface sensing signaling procedure. For the air interface procedure in steps 4-8, FIG. 10 further provides a terminal-autonomous UE-to-UE sensing air interface flowchart, mainly for the OOC scenario.

### 4. Radio Resource Control (NR RRC) measurement

The measurement mainly refers to mobility measurements in the connected state. After a network issues measurement configuration to UE, the UE detects signal quality status of neighboring cells according to parameters indicated in the measurement configuration, such as measurement objects and reporting configuration, and feeds back measurement reporting information to the network, to perform switching or to improve the neighboring cell relationship list by the network.

### 4.1 Measurement Configuration

In NR, a network sends measurement configuration information to UE in the connected state via RRC signaling, and the UE performs (intra-frequency, inter-frequency, or inter-RAT) measurement according to content of the measurement configuration information, and then reports measurement results to the network. The network performs measurement configuration using RRC connection reconfiguration. The measurement configuration information includes the following contents:

### 1) Measurement Object

For intra-frequency and inter-frequency measurements, each measurement object indicates a time-frequency position to be measured and subcarrier spacing of a reference signal. For cells associated with the measurement object, the network may configure a cell Offset list, a blacklist cell list, and a whitelist cell list.

For inter-RAT measurements, each measurement object corresponds to a separate Evolved Universal Terrestrial Radio Access (E-UTRA) frequency point, and the network may configure a cell Offset list, a blacklist cell list, and a whitelist cell list for cells associated with the E-UTRA frequency point.

The UE does not perform any operation on the blacklisted cells during event evaluation and measurement report. The UE performs event evaluation and measurement report for whitelisted cells.

For each Measurement frequency point, the network configures Serving Measurement and Timing Configuration (SMTC) to indicate time when the UE receives Synchronization Signal Blocks (SSBs) on a neighboring cell(s) corresponding to the frequency point. The SMTC Configuration includes a period of the SMTC, a start time offset of the SMTC within one period, a duration of the SMTC, and the like.

### 2) Reporting Configuration

Each measurement object corresponds to one or more reporting configurations. The reporting configuration includes:
- Reporting criterion: i.e., the trigger condition for the UE to perform measurement reporting, which may be periodic trigger reporting or event-triggered reporting.
- Reference Signal (RS) type: RS used by the UE for beam and cell measurement, which may be Synchronization Signal/Physical Broadcast Channel (SS/PBCH) block or Channel State Information Reference Signal (CSI-RS).
- Reporting format: measurement reporting quantities (e.g., RSRP) per cell and per beam for the UE, which further include other related information, such as the maximum number of cells reported by the UE and the maximum number of beams reported per cell.

### 3) Measurement Identity

It is a separate ID that associates measurement objects with reporting configurations. One measurement object may be associated with multiple reporting configurations at the same time, or one reporting configuration may be associated with multiple measurement objects at the same time, which can be distinguished by measurement identities.

### 4) Measurement Gap

The measurement gap is used to indicate the time during which UE performs inter-frequency/inter-system measurements. The UE performs inter-frequency/inter-system measurements during the measurement gap. The measurement gap configuration includes a period of the measurement gap, a start time offset of the measurement gap within a period, a duration of the measurement gap, and the like.

### 4.2 Measurement Reporting

UE performs measurement according to measurement configuration issued by the network and performs evaluation of measurement reporting when certain trigger conditions are met. If the reporting conditions are met, the UE fills in a measurement report and sends it to the network within the measurement report.

Measurement reporting is divided into three categories:
- event-triggered reporting;
- periodic reporting;
- event-triggered periodic reporting.

In some embodiments, it is determined whether to switch the source sensing node to the target sensing node based on the first information sent by the source sensing node or the candidate sensing nodes. Characteristic information of a sensing target is indicated by the first information to assist the first node in determining the switching of sensing services among different sensing nodes. The manner in which the first node determines whether to perform switching of sensing node includes, but is not limited to, at least one of the following three implementations (where the order does not imply superiority of any implementation):
implementation 1: based on characteristic information of the sensing target reported by the source sensing node and the candidate sensing nodes (where the first node is SF);
implementation 2: based on measurement information of the sensing target reported by the source sensing node and the candidate sensing nodes (where the first node is SF);
implementation 3: Switch between the source sensing node and the candidate sensing nodes (where the first node is the source sensing node).

It is to be noted that in the embodiments of the present application, the sensing may be equivalent to or replaced with at least one of: positioning, ranging, velocity measurement, angle measurement, target imaging, target detection, target tracking, or target recognition.

The following gives introduction to these three implementations.

### Implementation 1: based on characteristic information of the sensing target reported by the source sensing node and the candidate sensing nodes

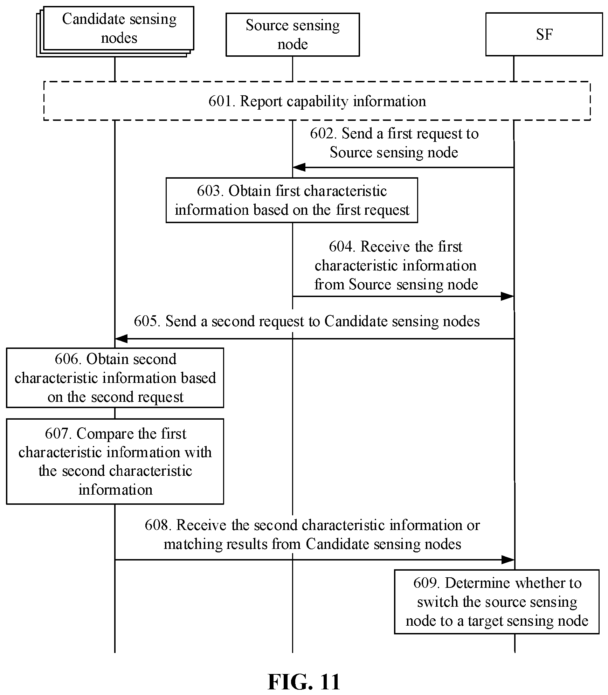

FIG. 11 illustrates a flowchart of a method for execution of sensing service provided by an exemplary embodiment of the present application, where the method is jointly executed by an SF, a source sensing node, and candidate sensing nodes. The method includes all or part of following operations 601 to 609.

In operation 601, sensing nodes report capability information.

In some embodiments, the sensing nodes report the capability information, including that: the source sensing node and/or candidate sensing nodes report the capability information to the SF.

In some embodiments, the source sensing node and/or the candidate sensing nodes report the capability information to the SF based on a reporting request for the capability information from the SF. The reporting request for the capability information includes an indication that the source sensing node and/or the candidate sensing nodes provide capability information related to continuity of a sensing service. The capability information may be carried in a reporting response.

The capability information is used to indicate whether the source sensing node and/or the candidate sensing nodes have capability to ensure the continuity of the sensing service.

Optionally, the capability information is used to indicate whether the source sensing node and/or the candidate sensing nodes have a capability to extract characteristic information of a sensing target. For example, the capability information is used to indicate whether the source sensing node supports the capability to extract first characteristic information of the sensing target, or the capability information is used to indicate whether the candidate sensing nodes have the capability to extract second characteristic information of the sensing target. The first characteristic information is characteristic information of a first sensing target sensed by the source sensing node, and the second characteristic information is characteristic information of a sensing target sensed by the candidate sensing nodes.

In some embodiments, the source sensing node and/or the candidate sensing nodes reporting capability information to the SF includes that: the source sensing node and/or the candidate sensing nodes report a sensing capability to the SF. The source sensing node and/or the candidate sensing nodes may report at least one of their own sensing capabilities, such as sensing range, sensing accuracy, sensing speed, etc., to assist the SF in evaluating applicability and reliability of the source sensing node and/or the candidate sensing nodes. The source sensing node and/or the candidate sensing nodes report to the SF their own characteristic extraction capabilities, such as the capability of extracting characteristic information of the sensing target, to assist the SF in determining whether the source sensing node and/or the candidate sensing nodes are suitable for sensing services. The source sensing node and/or the candidate sensing nodes report to the SF their own communication capabilities, including at least one of a communication protocol, a communication bandwidth, a communication stability, etc., to assist the SF in selecting an appropriate source sensing node and/or candidate sensing node for communication and data transmission.

In some embodiments, the source sensing node and/or the candidate sensing nodes report the capability information to the SF, to enable the SF to better manage and coordinate the execution of sensing services.

In operation 602, the SF sends a first request to the source sensing node.

The first request is used to request that the source sensing node obtains first characteristic information. The first characteristic information is characteristic information of a first sensing target sensed by the source sensing node.

In some embodiments, characteristic information of a sensing target includes at least one of the following information:
- translational characteristic of the sensing target;
- Radar Cross Section (RCS) characteristic of the sensing target;
- micro-motion characteristic of the sensing target; or
- target imaging characteristic of the sensing target.

In some embodiments, the translational characteristic of the sensing target includes at least one of: position, velocity, acceleration, latency, or doppler shift, etc., of the sensing target; the RCS characteristic of the sensing target includes a radar cross section or a reflected signal receive power of the sensing target; the micro-motion characteristic of the sensing target includes micro-doppler characteristic; and the target imaging characteristic of the sensing target includes at least one of a human body, an Unmanned Aerial Vehicle (UAV), a vehicle, etc.

In some embodiments, the translational characteristic of the sensing target may be obtained by a sensing node, where the position describes spatial position of the sensing target, the velocity and acceleration describe a motion status of the sensing target, the latency and doppler shift are related to signal propagation. The doppler shift refers to the change in a signal frequency caused by the motion of the sensing target, where the signal frequency increases when the sensing target approaches the sensing node; and the signal frequency decreases when the sensing target moves away from the sensing node. In some embodiments, the RCS characteristic of the sensing target is a measure for the sensing target's capability to reflect radar waves, and the reflected signal receive power is the power intensity of the reflected signal received from the sensing target. The RCS characteristic may be measured by the sensing node. In some embodiments, the micro-motion characteristic refers to a change such as small vibration or swing generated by the sensing target during motion. The micro-motion characteristic of the sensing target includes a micro-doppler characteristic, which is a frequency shift caused by the micro-motion of the sensing target, and is used to determine the micro-motion status of the sensing target. Taking a human as an example of the sensing target, the micro-motion characteristic refers to characteristic of at least one of micro motions of the sensing target, such as breath, heartbeat, gait, etc.. In some embodiments, the target imaging characteristic of the sensing target includes the classification of the sensing target, which refers to characteristics presented by the sensing target during the imaging process. By obtaining the target imaging characteristic of the sensing target, the SF can accurately identify and classify the sensing target.

In some embodiments, the first characteristic information is used to uniquely identify a current sensing target. The first sensing target is a current sensing target for which the source sensing node performs sensing services.

In some embodiments, the first request includes a request for the first characteristic information of the first sensing target. Exemplarily, the first request is used to request that the source sensing node provides position information of the first sensing target, to determine the position of the first sensing target in a sensing region; or the first request is used to request that the source sensing node provides velocity information of the first sensing target, to know the motion status and speed of the first sensing target; or the first request is used to request that the source sensing node provides shape information of the first sensing target, to know the appearance feature and shape of the first sensing target; or the first request is used to request that the source sensing node provides identification information of the first sensing target, to determine the category or identity of the first sensing target. By sending the first request, the SF obtains the first characteristic information of the first sensing target from the source sensing node to perform subsequent sensing tasks and decisions.

In operation 603, the source sensing node obtains first characteristic information based on the first request.

In some embodiments, when the source sensing node receives the first request sent by the SF, the source sensing node obtains characteristic information of its sensed first sensing target according to the content in the first request.

In some embodiments, the first characteristic information may be all or part of the characteristic information of a sensing target.

In some embodiments, the source sensing node receives a request for obtaining characteristic information of the first sensing target sent by the SF, where the first request includes first measurement information. Then, the source sensing node extracts the characteristic information of the first sensing target according to the first measurement information to obtain the first characteristic information. The first sensing target is a current sensing target for which the source sensing node performs the sensing service.

In some embodiments, the source sensing node is a base station, and the source sensing node may perform sensing of the first sensing target through a reference signal, the reference signal including at least one of an uplink reference signal, a downlink reference signal, or a sidelink reference signal. Alternatively, the source sensing node is a UE, and the source sensing node may perform sensing of the first sensing target by at least one of a visual sensor, an infrared sensor, or the like, and sends the sensed first characteristic information to the SF.

Exemplarily, the source sensing node obtains characteristic information of the first sensing target through a visual sensor. The visual sensor (e.g., a camera) may capture images or videos of the first sensing target, and may extract characteristic information such as shape and color of the first sensing target by using image processing and computer vision algorithms, for recognition and classification of the first sensing target.

In some embodiments, the first characteristic information includes at least one of a translational characteristic of the sensing target, an RCS characteristic of the sensing target, a micro-motion characteristic of the sensing target, a target imaging characteristic of the sensing target, or the like. Optionally, the source sensing node may obtain all or part of the characteristic information of the first sensing target.

In some embodiments, after obtaining the first characteristic information, the source sensing node sends the first characteristic information to the SF through a first response.

In operation 604, the SF receives the first characteristic information sent by the source sensing node.

In some embodiments, the SF receives a first response sent by the source sensing node. The first response includes the first characteristic information sensed by the source sensing target.

In some embodiments, the SF receives the first characteristic information sent by the source sensing node, including: receiving at least one of the following in the first characteristic information: a translational characteristic of the sensing target, an RCS characteristic of the sensing target, a micro-motion characteristic of the sensing target, a target imaging characteristic of the sensing target, or the like.

In some embodiments, the source sensing node sends the first characteristic information to the SF. Optionally, the source sensing node may send the first characteristic information to the SF through an RRC/sensing protocol, and the SF may receive the first characteristic information sent by the source sensing node and perform processing and decision making according to the first characteristic information.

In operation 605, the SF sends a second request to candidate sensing nodes.

The second request is used to request that the candidate sensing nodes obtain second characteristic information. The second characteristic information is characteristic information of a sensing target sensed by the candidate perception nodes.

In some embodiments, the second request includes a request for the second characteristic information of the sensing target. Exemplarily, the second request is used for requesting that the candidate sensing nodes provide position information of the sensing target, to determine the position of the sensing target in a sensing region; or the second request is used for requesting that the candidate sensing nodes provide speed information of the sensing target, to know the motion status and velocity of the sensing target; or the second request is used for requesting that the candidate sensing nodes provide shape information of the sensing target, to know the appearance feature and shape of the sensing target; or the second request is used for requesting that the candidate sensing nodes provide identification information of the sensing target, to determine the category or identity of the sensing target. By sending the second request, the SF obtains the second characteristic information of the sensing target from the candidate sensing nodes to perform subsequent sensing tasks and decisions.

In some embodiments, the SF sends a second request to the candidate sensing nodes, the second request carrying the first characteristic information obtained from the source sensing node. The first characteristic information in the second request may be used to perform sensing measurement tasks by the candidate sensing nodes. For example, if the first characteristic information is the position and velocity of the sensing target, the second request may allow requesting that the candidate sensing nodes perform tracking and measurement on the sensing target, to obtain trajectory information of the sensing target. If the first characteristic information is the RCS characteristic of the sensing target, the second request may allow requesting that the candidate sensing nodes measures the sensing target, to obtain a reflected characteristic of the sensing target.

In operation 606, the candidate sensing nodes obtain second characteristic information based on the second request.

In some embodiments, the candidate sensing nodes receive a second request sent by the SF, and the candidate sensing nodes obtain second characteristic information of the sensing target according to the second request.

In some embodiments, the second characteristic information may be all or part of the characteristic information of the sensing target.

In some embodiments, the candidate sensing node receives a request for obtaining the characteristic information of the sensing target sent by the SF, where the second request includes second measurement information. Then, the source sensing node extracts the characteristic information of the sensing target according to the second measurement information to obtain the second characteristic information.

In some embodiments, the candidate sensing nodes may perform sensing of the sensing target by at least one of a reference signal, a visual sensor, an infrared sensor, or the like, and sends the second characteristic information to the SF.

In some embodiments, the second characteristic information includes at least one of: a translational characteristic of the sensing target, an RCS characteristic of the sensing target, a micro-motion characteristic of the sensing target, a target imaging characteristic of the sensing target, or the like. Optionally, the candidate sensing nodes may obtain all or part of the characteristic information of the sensing target.

In some embodiments, after obtaining the second characteristic information, the candidate sensing nodes send the second characteristic information to the SF through a second response.

In some embodiments, when the candidate sensing nodes performs sensing of sensing target based on the second request, the source sensing node maintains performing sensing of the first sensing target to ensure that the sensing task is not interrupted. When the candidate sensing nodes may uniquely identify and confirm the first sensing target, the source sensing node stops the sensing of the first sensing target to avoid resource waste caused by redundant sensing of the first sensing target by the source sensing node.

In operation 607, the candidate sensing nodes match or compare the first characteristic information with the second characteristic information to obtain matching results.

In some embodiments, the second request sent by the SF to the candidate sensing nodes includes a request that the candidate sensing nodes obtain the second characteristic information and the first characteristic information obtained by the source sensing node.

In some embodiments, after receiving the second request sent by the SF, the candidate sensing nodes obtain the second characteristic information based on the second request. The candidate sensing nodes match the first characteristic information with the second characteristic information and generate a matching result. The matching result is used to indicate a matching degree between the first characteristic information and the second characteristic information.

In some embodiments, the matching result is obtained by performing similarity calculation on the first characteristic information and the second characteristic information.

In operation 608, the SF receives the second characteristic information or matching results sent by the candidate sensing nodes.

In some embodiments, the SF receives a second response sent by the candidate sensing nodes. The second response includes: second characteristic information sensed by the candidate sensing target, and/or matching results obtained by matching the first characteristic information and the second characteristic information by the candidate sensing nodes.

In some embodiments, the SF receives the second characteristic information sent by the candidate sensing nodes, including: receiving at least one of the following in the second characteristic information: translational characteristic of the sensing target, RCS characteristic of the sensing target, micro-motion characteristic of the sensing target, target imaging characteristic of the sensing target, or the like.

In some embodiments, the SF receives a matching result sent by one or more candidate sensing nodes, and the matching result is used to indicate a matching degree between the first characteristic information and the second characteristic information. When the first characteristic information and the second characteristic information match, the SF switches the source sensing node to a target sensing node, where the target sensing node is a matching candidate sensing node.

In some embodiments, the matching result is indicated using a first bit, and the matching result includes match and mismatch. When the first bit takes a first value, it is used to indicate match between the first characteristic information and the second characteristic information. When the first bit takes a second value, it is used to indicate mismatch between the first characteristic information and the second characteristic information. For example, when the first bit takes 1, it indicates that the first characteristic information and the second characteristic information match, and when the first bit takes 0, it indicates that the first characteristic information and the second characteristic information do not match. Alternatively, when the first bit takes 0, it indicates that the first characteristic information and the second characteristic information match, and when the first bit takes 1, it indicates that the first characteristic information and the second characteristic information do not match.

In some embodiments, the matching result is indicated by at least two bits, and the matching result represents a matching probability between the first characteristic information and the second characteristic information. The at least two bits have at least three values, each value being used to indicate one matching probability between the first characteristic information and the second characteristic information. For example, assuming that the matching result is indicated using two bits, and the two bits have three values: 00, 01, and 10. Here, 00 indicates that the matching probability between the first characteristic information and the second characteristic information is 0%, 01 indicates that the matching probability between the first characteristic information and the second characteristic information is 25%, and 10 indicates that the matching probability between the first characteristic information and the second characteristic information is 75%. Such matching results may be used to indicate matching degrees between the first characteristic information and the second characteristic information. For example, when the matching result is 0%, it indicates that the first characteristic information and the second characteristic information do not match. When the matching result is 01, it indicates that there is a low matching degree between the first characteristic information and the second characteristic information. When the matching result is 10, it indicates that there is a high matching degree between the first characteristic information and the second characteristic information.

In some embodiments, it may be considered that the first characteristic information and the second characteristic information match, when the matching probability between the first characteristic information and the second characteristic information is higher than a preset condition. For example, when a matching probability between the first characteristic information and the second characteristic information is higher than 50%, it indicates that the first characteristic information and the second characteristic information match.

In some embodiments, the candidate sensing nodes may send the second characteristic information and/or the matching result between the first characteristic information and the second characteristic information to the SF through an RRC/sensing protocol.

In operation 609, the SF determines whether to switch the source sensing node to a target sensing node.

In some embodiments, according to the second characteristic information obtained by the candidate sensing nodes and/or the matching result between the first characteristic information and the second characteristic information, the SF may determine whether to switch the source sensing node to a candidate sensing node (i.e., the target sensing node) corresponding to the matching result. In this way, it may ensure that the characteristic information of the sensing target is more accurately matched, and the accuracy and reliability of the sensing measurement is improved.

In some embodiments, when the matching result is indicated using the first bit, the SF switches the source sensing node to the target sensing node when the matching result indicates match. When the matching result is indicated using at least two bits, the matching result represents a matching probability between the first characteristic information and the second characteristic information; and when the matching probability is greater than a preset condition (for example, the matching probability is greater than 50%), it is considered that the first characteristic information and the second characteristic information match. Then, the SF switches the source sensing node to the target sensing node.

In summary, in the method provided by the embodiments of the present application, when the SF and the source sensing node are different nodes, the SF sends a first request to the source sensing node and receives the first characteristic information sensed by the source sensing node; the SF sends a second request to the candidate sensing nodes and receives the second characteristic information and/or a matching result between the first characteristic information and the second characteristic information obtained by the candidate sensing nodes, and the SF determines whether to perform switching of sensing node according to the second characteristic information and/or the matching result between the first characteristic information and the second characteristic information. The source sensing node and the candidate sensing nodes have capabilities to directly obtain the characteristic information of the sensing target, and in this case, the SF can perform switching of sensing node only according to the characteristic information of the sensing target reported by the source sensing node and the candidate sensing nodes.

It should be noted that in the method provided by the embodiments of the present application, the operation that the sensing nodes reports capability information to the SF is optional. In the embodiments of the present application, the source sensing node first reports the first characteristic information to the SF, and the candidate sensing nodes then reports the second characteristic information to the SF. In a possible implementation, the candidate sensing nodes may report the second characteristic information to the SF first, and then the source sensing node reports the first characteristic information to the SF, the source sensing node matches the first characteristic information with the second characteristic information to obtain a matching result, and report the matching result to the SF. Or, the source sensing node and the candidate sensing nodes simultaneously obtain the characteristic information of the sensing target, and then report the obtained first characteristic information and second characteristic information to the SF respectively; the SF matches the first characteristic information and the second characteristic information to obtain a matching result, and determines whether to perform switching of sensing node according to the matching result. The above is merely exemplary description, and the present application is not limited thereto.

### Implementation 2: based on measurement information of the sensing target reported by the source sensing node and the candidate sensing nodes

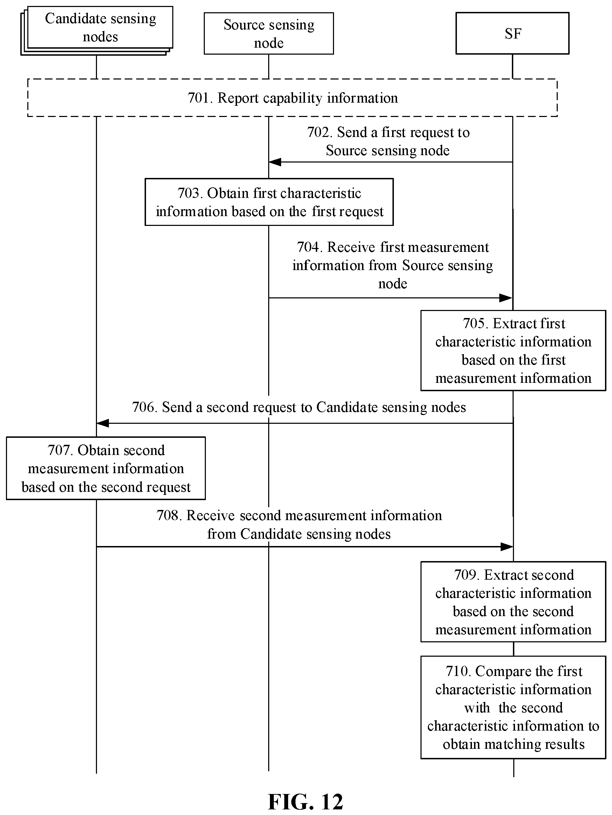

FIG. 12 illustrates a flowchart of a method for execution of sensing service provided by an exemplary embodiment of the present application, where the method is jointly executed by an SF, a source sensing node, and candidate sensing nodes. The method includes all or part of following operations 701 to 710.

In operation 701, sensing nodes report capability information.

In some embodiments, the operation of the sensing nodes reporting the capability information includes that the source sensing node and/or candidate sensing nodes report the capability information to the SF.

In some embodiments, the source sensing node and/or the candidate sensing nodes report the capability information to the SF based on a reporting request for the capability information from the SF. The reporting request for the capability information includes an indication that the source sensing node and/or the candidate sensing nodes provide capability information related to continuity of a sensing service. The capability information may be carried in a reporting response.

The capability information is used to indicate whether the source sensing node and/or the candidate sensing nodes have capabilities to ensure the continuity of the sensing service.

Optionally, the capability information is used to indicate whether the source sensing node and/or the candidate sensing nodes have the capability to extract characteristic information of the sensing target. For example, the capability information is used to indicate whether the source sensing node supports the capability to extract first characteristic information of the sensing target, or the capability information is used to indicate whether the candidate sensing nodes have the capability to extract second characteristic information of the sensing target. The first characteristic information is characteristic information of a first sensing target sensed by the source sensing node, and the second characteristic information is characteristic information of a sensing target sensed by the candidate sensing nodes.

In some embodiments, the source sensing node and/or the candidate sensing nodes reporting capability information to the SF includes that: the source sensing node and/or the candidate sensing nodes report a sensing capability to the SF. The source sensing node and/or the candidate sensing nodes may report at least one of their own sensing capabilities, such as sensing range, sensing accuracy, sensing speed, etc., to assist the SF in evaluating applicability and reliability of the source sensing node and/or the candidate sensing nodes. The source sensing node and/or the candidate sensing nodes report to the SF their own characteristic extraction capabilities, such as the capability of extracting characteristic information of the sensing target, to assist the SF in determining whether the source sensing node and/or the candidate sensing nodes are suitable for sensing services. The source sensing node and/or the candidate sensing nodes report to the SF their own communication capabilities, including at least one of a communication protocol, a communication bandwidth, a communication stability, etc., to assist the SF in selecting an appropriate source sensing node and/or candidate sensing node for communication and data transmission.

In some embodiments, the source sensing node and/or the candidate sensing nodes report capability information to the SF, to enable the SF to better manage and coordinate the execution of sensing services.

In operation 702, the SF sends a first request to the source sensing node.

The first request is used to request that the source sensing node obtains first measurement information. The first measurement information is used to generate first characteristic information.

In some embodiments, the first measurement information is measurement data used to generate the first characteristic information.

In some embodiments, the first request includes a request for the first measurement information of a first sensing target. The source sensing node does not directly obtain the first characteristic information, while the source sensing node reports first measurement information used for obtaining the first characteristic information, and the SF obtains the first characteristic information according to the first measurement information reported by the source sensing node.

In operation 703, the source sensing node obtains first measurement information based on the first request.

In some embodiments, the source sensing node receives the first request sent by the SF, and the source sensing node obtains, according to the first request, first measurement information used for generating the first characteristic information.

In some embodiments, the source sensing node may perform sensing of the first sensing target by at least one of a reference signal, a visual sensor, an infrared sensor, or the like, obtains first measurement information of the first sensing target from a corresponding sensor or a sensing data source, and sends the first measurement information to the SF.

In some embodiments, the first characteristic information includes at least one of a translational characteristic of the sensing target, an RCS characteristic of the sensing target, a micro-motion characteristic of the sensing target, a target imaging characteristic of the sensing target, or the like. The first measurement information is measurement data for generating the first characteristic information.

In some embodiments, the first measurement information includes at least one of a translational characteristic measurement of the sensing target, an RCS characteristic measurement of the sensing target, a micro-motion characteristic measurement of the sensing target, a target imaging characteristic measurement of the sensing target, or the like.

In some embodiments, the source sensing node may extract the first measurement information from the first characteristic information. Exemplarily, the source sensing node may obtain imaging data of the first sensing target through a visual sensor (e.g., a camera), and the source sensing node may obtain measurement data of the first sensing target through a reference signal.

In operation 704, the SF receives the first measurement information sent by the source sensing node.

In some embodiments, the SF receives a first response sent by the source sensing node. The first response includes: first measurement information obtained by the source sensing target.

In some embodiments, the operation that the SF receives the first measurement information sent by the source sensing node includes: receiving at least one of the following in the first measurement information: a translational characteristic measurement of the sensing target, an RCS characteristic measurement of the sensing target, a micro-motion characteristic measurement of the sensing target, a target imaging characteristic measurement of the sensing target, or the like.

In some embodiments, the source sensing node may send the first measurement information to the SF through an RRC/sensing protocol, and the SF receives the first measurement information sent by the source sensing node and extracts the first characteristic information based on the first measurement information.

In operation 705, the SF extracts the first characteristic information based on the first measurement information.

In some embodiments, the SF may utilize the first measurement information to extract the first characteristic information.

The first measurement information is measurement information of a first sensing target obtained by the source sensing node, and the first characteristic information is characteristic information of the first sensing target extracted from the first measurement information.

In some embodiments, the source sensing node reports the first measurement information obtained by itself to the SF, and the SF extracts the first characteristic information according to the first measurement information. Optionally, the SF fuses and processes the first measurement information to obtain the first characteristic information. For example, the SF may obtain the position and motion trajectory of the first sensing target by fusing measurement information from the camera and the reference signal.

In operation 706, the SF sends a second request to the candidate sensing nodes.

The second request is used to request that the candidate sensing nodes obtain second measurement information. The second measurement information is used to generate second characteristic information.

In some embodiments, the second measurement information is measurement data used for generating the second characteristic information.

In some embodiments, the second request includes a request for the second measurement information of a sensing target. The candidate sensing nodes do not directly obtain characteristic information of the sensing target, while the candidate sensing nodes report the second measurement information for obtaining the second characteristic information, and the SF obtains the characteristic information of the sensing target according to the second measurement information reported by the candidate sensing nodes.

In operation 707, the candidate sensing nodes obtain second measurement information based on the second request.

The second request is used to request that the candidate sensing nodes obtain second measurement information. The second measurement information is used to generate second characteristic information.

In some embodiments, the candidate sensing nodes receive the second request sent by the SF, and the candidate sensing nodes obtain, according to the second request, the second measurement information for generating second characteristic information.

In some embodiments, the second measurement information includes at least one of the following information:
- translational characteristic measurement of the sensing target;
- RCS characteristic measurement of the sensing target;
- micro-motion characteristic measurement of the sensing target;
- target imaging characteristic measurement of the sensing target.

In some embodiments, the candidate sensing nodes may perform sensing of a sensing target by at least one of a reference signal, a visual sensor, an infrared sensor, or the like, obtain second measurement information of the sensing target from a corresponding sensor or a sensing data source, and send the second measurement information to the SF.

In some embodiments, the second characteristic information includes at least one of a translational characteristic of the sensing target, an RCS characteristic of the sensing target, a micro-motion characteristic of the sensing target, a target imaging characteristic of the sensing target, or the like. The second measurement information is measurement data for generating the second characteristic information.

In some embodiments, the second measurement information includes at least one of: translational characteristic measurement of the sensing target, RCS characteristic measurement of the sensing target, micro-motion characteristic measurement of the sensing target, target imaging characteristic measurement of the sensing target, or the like. In some embodiments, the candidate sensing nodes may extract the second measurement information from the second characteristic information.

In some embodiments, after obtaining the second measurement information, the candidate sensing nodes send the second measurement information to the SF through a second response.

In operation 708, the SF receives the second measurement information sent by the candidate sensing nodes.

In some embodiments, the SF receives a second response sent by the candidate sensing nodes. The second response includes: the second measurement information obtained by the candidate sensing nodes.

In some embodiments, the operation that the SF receives the second measurement information sent by the candidate sensing nodes includes: receiving at least one of the following in the second measurement information: translational characteristic measurement of the sensing target, RCS characteristic measurement of the sensing target, micro-motion characteristic measurement of the sensing target, target imaging characteristic measurement of the sensing target, or the like.

In some embodiments, the candidate sensing nodes may send the second measurement information to the SF through an RRC/sensing protocol, and the SF receives the second measurement information sent by the candidate sensing nodes and extracts the second characteristic information from the second measurement information.

In operation 709, the SF extracts second characteristic information based on the second measurement information.

In some embodiments, the SF may utilize the second measurement information to extract the second characteristic information.

The second measurement information is measurement information of the sensing target obtained by the candidate sensing nodes, and the second characteristic information is characteristic information of the sensing target extracted from the second measurement information.

In some embodiments, the candidate sensing nodes report measurement information of a sensing target obtained by itself to the SF, and the SF extracts the second characteristic information according to the second measurement information. Optionally, the SF fuses and processes the measurement information of the sensing target to obtain the characteristic information of the sensing target.

In operation 710, the SF matches the first characteristic information with the second characteristic information to obtain matching results.

In some embodiments, the SF extracts the first characteristic information based on the first measurement information, and extracts the second characteristic information based on the second measurement information. The SF matches the first characteristic information with the second characteristic information to obtain a matching result, where the matching result is used to indicate a matching degree between the first characteristic information and the second characteristic information. When the first characteristic information and the second characteristic information match, the SF switches the source sensing node to a target sensing node, where the target sensing node is a matching candidate sensing node.

In some embodiments, the matching result is indicated using a first bit, and the matching result includes match and mismatch. When the first bit takes a first value, it is used to indicate match between the first characteristic information and the second characteristic information. When the first bit takes a second value, it is used to indicate mismatch between the first characteristic information and the second characteristic information. For example, when the first bit takes 1, it indicates that the first characteristic information and the second characteristic information match, and when the first bit takes 0, it indicates that the first characteristic information and the second characteristic information do not match. Alternatively, when the first bit takes 0, it indicates that the first characteristic information and the second characteristic information match, and when the first bit takes 1, it indicates that the first characteristic information and the second characteristic information do not match.

In some embodiments, the matching result is indicated by at least two bits, and the matching result represents a matching probability between the first characteristic information and the second characteristic information. The at least two bits have at least three values, each value being used to indicate one matching probability between the first characteristic information and the second characteristic information. For example, assuming that the matching result is indicated using two bits, and the two bits have three values: 00, 01, and 10. Here, 00 indicates that the matching probability between the first characteristic information and the second characteristic information is 0%, 01 indicates that the matching probability between the first characteristic information and the second characteristic information is 25%, and 10 indicates that the matching probability between the first characteristic information and the second characteristic information is 75%. Such matching results may be used to indicate matching degrees between the first characteristic information and the second characteristic information.

In some embodiments, the SF switches the source sensing node to the target sensing node when the first characteristic information and the second characteristic information match.

In summary, in the method provided by the embodiments of the present application, the SF generates first characteristic information based on the first measurement information provided by the source sensing node, generates second characteristic information based on the second measurement information provided by the candidate sensing nodes; and the SF matches the first characteristic information with the second characteristic information to obtain a matching result, and evaluates a matching degree between the source sensing node and the candidate sensing nodes according to the matching result. The task of obtaining and matching characteristic information of a sensing target is transferred to the SF, instead of being performed directly by the source sensing node and the candidate nodes. In this way where the SF directly obtains the characteristic information of the sensing target and the matching result, the SF can obtain the characteristic information of the sensing target according to the requirements for the sensing service, avoiding redundant sensing of the sensing target by sensing nodes and waste of resources. Moreover, the SF can perform switching of sensing node more efficiently according to the matching result.

It should be noted that in the method provided by the embodiments of the present application, the operation that the sensing nodes report the capability information to the SF is optional. In the embodiments of the present application, the source sensing node may first report the first measurement information to the SF, and the candidate sensing nodes then report the second measurement information to the SF. In a possible implementation, the candidate sensing nodes may report the second measurement information to the SF first, and then the source sensing node reports the first measurement information to the SF. Or, the source sensing node and the candidate sensing nodes simultaneously obtain measurement information of a sensing target, and then report the obtained first measurement information and the second characteristic measurement to the SF respectively; the SF generates the first characteristic information and the second characteristic information according to the first measurement information and the second measurement information respectively, matches the first characteristic information with the second characteristic information to obtain a matching result, and determines whether to perform switching of sensing node according to the matching result. The above is merely exemplary description, and the present application is not limited thereto.

### Implementation 3: switch between the source sensing node and candidate sensing nodes (where the first node is the source sensing node)

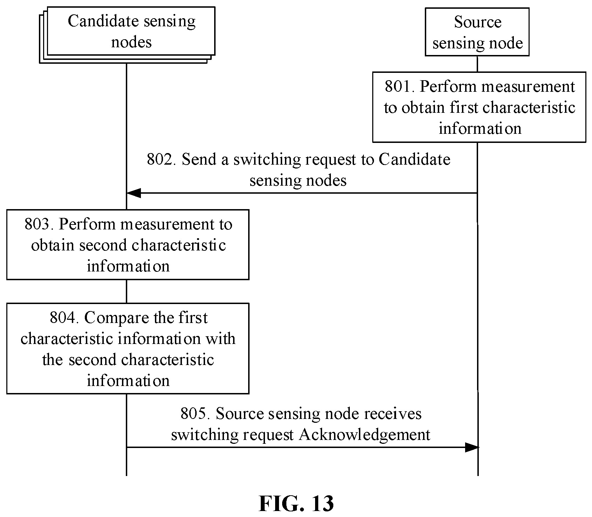

FIG. 13 illustrates a flowchart of a method for execution of sensing service provided by an exemplary embodiment of the present application, where the method is jointly executed by a source sensing node and candidate sensing nodes. The method includes all or part of following operations 801 to 805.

In operation 801, the source sensing node performs measurement to obtain first characteristic information.

The first characteristic information is characteristic information of a first sensing target sensed by the source sensing node.

In some embodiments, the source sensing node may perform sensing of the first sensing target by at least one of a reference signal, a visual sensor, an infrared sensor, or the like, to obtain the first characteristic information.

In some embodiments, characteristic information of a sensing target includes at least one of the following information:
- translational characteristic of the sensing target;
- RCS characteristic of the sensing target;
- micro-motion characteristic of the sensing target; or
- target imaging characteristic of the sensing target.

In some embodiments, the translational characteristic of the sensing target includes at least one of position, velocity, acceleration, latency, or doppler shift, etc., of the sensing target; the RCS characteristic of the sensing target includes a radar cross section or reflected signal receive power of the sensing target; the micro-motion characteristic of the sensing target includes micro-doppler characteristic; and the target imaging characteristic of the sensing target includes at least one of a human body, a UAV, a vehicle, etc.

In some embodiments, the first characteristic information obtained by the source sensing node may be all or part of the characteristic information of the sensing target.

In operation 802, the source sensing node sends a switching request to candidate sensing nodes.

The switching request includes the first characteristic information obtained by the source sensing node.

In some embodiments, when the source sensing node is unable to perform sensing of the first sensing target or has insufficient sensing capabilities, the source sensing node may send a switching request to the candidate sensing nodes to switch a sensing service to a candidate sensing node to ensure continuity of the sensing service.

In some embodiments, in addition to the first characteristic information obtained by the source sensing node, the switching request further includes at least one of: a requirement of a sensing task, a status of the source sensing node, or the like. The status of the source sensing node includes at least one of: availability, load condition, energy consumption, or the like of the source sensing node, and is used to assist the candidate sensing nodes in evaluating the availability of the source sensing node.

In some embodiments, the switching request is used to indicate that the candidate sensing nodes perform a sensing operation on the first sensing target. The source sensing node sends a switching request to the candidate sensing nodes, and the candidate sensing nodes perform the sensing operation on the first sensing target.

In some embodiments, by sending of a switching request to the candidate sensing nodes, the candidate sensing nodes can determine whether to accept the switch based on information in the switching request and respond accordingly.

In some embodiments, the source sensing node sends a switching request to the candidate sensing nodes, and before the first sensing target is sensed by a candidate sensing node corresponding to the matching result, the source sensing node maintains performing sensing of the first sensing target to ensure the continuity of the sensing service.

In operation 803, the candidate sensing nodes perform measurement to obtain second characteristic information.

The second characteristic information is characteristic information of a sensing target sensed by the candidate sensing nodes.

In some embodiments, the candidate sensing nodes may perform sensing of the sensing target using at least one of: a reference signal, a visual sensor, an infrared sensor, or the like, to obtain the second characteristic information.

In some embodiments, characteristic information of the sensing target includes at least one of the following information:
- translational characteristic of the sensing target;
- RCS characteristic of the sensing target;
- micro-motion characteristic of the sensing target; or
- target imaging characteristic of the sensing target.

In some embodiments, the second characteristic information obtained by the candidate sensing nodes may be all or part of the characteristic information of the sensing target.

In operation 804, the candidate sensing nodes match the first characteristic information with the second characteristic information.

In some embodiments, the switching request sent by the source sensing node to the candidate sensing nodes includes a request that the candidate sensing nodes obtain the second characteristic information and the first characteristic information obtained by the source sensing node.

In some embodiments, after obtaining the second characteristic information, the candidate sensing nodes match the second characteristic information with the first characteristic information obtained by the source sensing node and generate a matching result. The matching result is used to indicate a matching degree between the first characteristic information and the second characteristic information.

In some embodiments, the candidate sensing nodes match the first characteristic information with the second characteristic information to obtain a matching result.

In some embodiments, when the matching result is mismatch, the candidate sensing node does not meet the requirement of being a target sensing node, and the switching of sensing node is not performed in this case. When the matching result is higher than a preset condition, it may be considered that the first characteristic information and the second characteristic information match, and the candidate sensing nodes send the matching result as a switching acknowledgement message to the source sensing node.

In one possible implementation, when the matching result is match, there may be other factors that affect the switching decision of the sensing node. For example, taking the candidate sensing node as a UE as an example, the other factors may include at least one of: user-set restrictions, insufficient battery power of the candidate sensing node, insufficient current remaining computing capability, etc. Due to the limitations imposed by other factors, the switching decision of the sensing node may be affected, and the candidate sensing node cannot be used for switching as the target sensing node.

It should be noted that in the process of sensing node switching, in addition to the matching result, the limitations from other factors need to be comprehensively considered to ensure the stability of sensing.

In operation 805, the source sensing node receives a switching request acknowledgement.

The switching request acknowledgment includes: matching results between the first characteristic information and the second characteristic information.

In some embodiments, after receiving the matching result sent by the candidate sensing nodes, the source sensing node confirms that a candidate sensing node may uniquely identify and confirm the sensing target, and the candidate sensing node corresponding to the matching result is the target sensing node. The source sensing node deactivates the sensing operation for the sensing target to avoid redundant sensing and resource waste.

In summary, in the method provided by the embodiments of the present application, the source sensing node performs measurement of a sensing target and obtains first characteristic information, sends the first characteristic information to the candidate sensing nodes; the candidate sensing nodes perform measurement on the sensing target and obtain second characteristic information, and obtain a matching result by matching the first characteristic information and the second characteristic information, where a candidate sensing node corresponding to the matching result is the target sensing node. In this way, sensing nodes can directly obtain characteristic information of a sensing target, interact directly with each other, and perform switching directly based on the matching results. This enables flexible switch and allocation of sensing tasks without involving SF, thereby improving the efficiency of sensing node switch.

It is to be noted that in one possible implementation, the source sensing node sends a switching request to the candidate sensing nodes, the switching request including: requesting that the candidate sensing nodes obtain second characteristic information; the candidate sensing nodes report the second characteristic information to the source sensing node; the source sensing node matches the first characteristic information with the second characteristic information by itself and obtains a matching result, and the source sensing node determines whether to perform switching of sensing node according to the matching result.

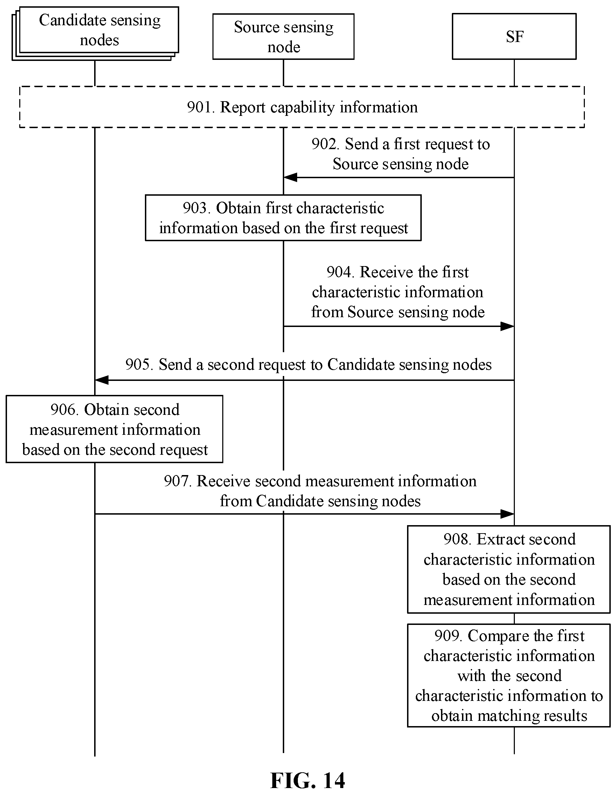

It is to be noted that in one possible implementation, the operations shown in FIG. 11 and the operations shown in FIG. 12 may be combined to form a new embodiment. FIG. 14 illustrates a flowchart of a method for execution of sensing service provided by an exemplary embodiment of the present application, where the method is jointly executed by a first node, a source sensing node, and candidate sensing nodes.

In operation 901, sensing nodes report capability information.

In operation 902, the first node sends a first request to the source sensing node.

In operation 903, the source sensing node obtains first characteristic information based on the first request.

In operation 904, the first node receives the first characteristic information sent by the source sensing node.

The contents of the operations 901 to 904 are as described in the above operations 601 to 604, and will not be repeated again here.

In operation 905, the first node sends a second request to the candidate sensing nodes.

The second request is used to request that the candidate sensing nodes obtain second measurement information.

In operation 906, the candidate sensing nodes obtain second measurement information based on the second request.

In operation 907, the first node receives the second measurement information sent by the candidate sensing nodes.

In operation 908, the first node extracts second characteristic information based on the second measurement information.

In operation 909, the first node matches the first characteristic information with the second characteristic information to obtain matching results.

The contents of the operations 905 to 909 are as described in the above operations 706 to 710, and will not be repeated again here.

In summary, in the method provided by the embodiment of the present application, the first node sends a first request to the source sensing node and receives first characteristic information sensed by the source sensing node; the first node sends a second request to the candidate sensing nodes and receives second measurement information sensed by the candidate sensing nodes; the first node generates second characteristic information based on the second measurement information provided by the candidate sensing nodes; the first node matches the first characteristic information with the second characteristic information to obtain matching results, evaluates matching degrees between the source sensing node and the candidate sensing nodes according to the matching results, and performs switching of sensing node according to the matching results.

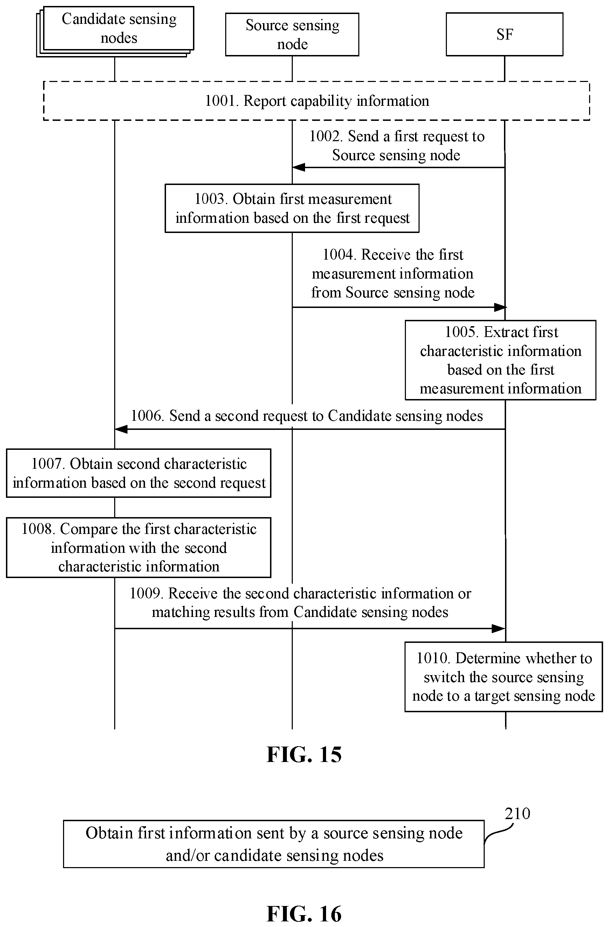

It is to be noted that in one possible implementation, the operations shown in FIG. 11 and the operations shown in FIG. 12 may be combined to form a new embodiment. FIG. 15 illustrates a flowchart of a method for execution of sensing service provided by an exemplary embodiment of the present application, where the method is jointly executed by a first node, a source sensing node, and candidate sensing nodes.

In operation 1001, sensing nodes report capability information.

In operation 1002, the first node sends a first request to the source sensing node.

In operation 1003, the source sensing node obtains first measurement information based on the first request.

In operation 1004, the first node receives the first measurement information sent by the source sensing node.

In operation 1005, the first node extracts first characteristic information based on the first measurement information.

The contents of the operations 1001 to 1005 are as described in the above operations 701 to 705, and will not be repeated again here.

In operation 1006, the first node sends a second request to the candidate sensing nodes.

In operation 1007, the candidate sensing nodes obtain second characteristic information based on the second request.

In operation 1008, the candidate sensing nodes match the first characteristic information with the second characteristic information.

In operation 1009, the first node receives the second characteristic information or matching results sent by the candidate sensing nodes.

In operation 1010, the first node determines whether to switch the source sensing node to a target sensing node.

The contents of the operations 1006 to 1010 are as described in the above operations 605 to 609, and will not be repeated again here.

In summary, in the method provided by the embodiments of the present application, a first node sends a first request to a source sensing node and receives first measurement information sensed by the source sensing node, and the first node generates first characteristic information based on the first measurement information provided by the source sensing node; the first node sends a second request to the candidate sensing nodes and receives second characteristic information sensed by the candidate sensing nodes and/or matching results between the first characteristic information and the second characteristic information, and the first node determines whether to perform switching of sensing node according to the second characteristic information and/or the matching results between the first characteristic information and the second characteristic information.

It should be noted that in one possible implementation, the operations in the embodiments of the present application may be combined or replaced with the operations in the procedures of the prior art in FIGS. 5, 6, 7, and 9 to form a new embodiment, which is not limited in the present application.

### First node side:

FIG. 16 illustrates a flowchart of a method for execution of sensing service according to an exemplary embodiment of the present application, where the method is jointly executed by a first node, a source sensing node, and candidate sensing nodes. The method includes all or part of the following operation 210.

In operation 210, first information sent by the source sensing node and/or the candidate sensing nodes is obtained by the first node.

The first information is used to determine whether to switch the source sensing node to a target sensing node. The first information is reference information used for assisting the first node in determining whether switching of a sensing node for a sensing target is required.

The target sensing node is all or part of the candidate sensing nodes, and the source sensing node and the target sensing node are used to perform a sensing service on a first sensing target. Optionally, the first sensing target may be a passive sensing target that does not have signal transmission or reception capabilities.

In some embodiments, the source sensing node is a node that is currently performing a sensing service, and the candidate sensing nodes are other nodes that may be used for switching as a target sensing node during execution of the sensing service. The first sensing target is a current sensing target for which the source sensing node performs the sensing service.

In some embodiments, the first information is information sent by the source sensing node to the first node, and/or information sent by the candidate sensing nodes to the first node.

In some embodiments, the first node is a sensing server node, playing the role and function of decision-making and control. The first node is responsible for receiving the first information sent by the source sensing node and the candidate sensing nodes, and determines whether to switch the source sensing node to a target sensing node according to the first information. Optionally, the first information includes characteristic information about a sensing target.

In some embodiments, the first node may evaluate the current sensing situation, the status of the sensing nodes, as well as availability and adaptability of the candidate sensing nodes according to the characteristic information of the sensing target, and determine whether the switching of sensing node is required.

In some embodiments, the first information includes first information sent by the source sensing node, or the first information includes first information sent by the candidate sensing nodes, or the first information includes first information sent by the source sensing node and the candidate sensing nodes.

In some embodiments, the first information is first characteristic information or first measurement information sent by the source sensing node, and/or the first information includes at least one of second characteristic information, second measurement information, or matching results sent by the candidate sensing nodes.

The first characteristic information is characteristic information of a first sensing target sensed by the source sensing node, and the first measurement information is used to generate the first characteristic information.

In some embodiments, the first node receives the first characteristic information or the first measurement information sent by the source sensing node.

The first measurement information is used to generate the first characteristic information, and the first characteristic information is characteristic information of a first sensing target sensed by the source sensing node. The first characteristic information is used to uniquely identify a current sensing target. The first sensing target is a current sensing target for which the source sensing node performs the sensing service.

In some embodiments, the first node receives a first response sent by the source sensing node. The first response includes: the first characteristic information or the first measurement information sensed by the source sensing target.

In some embodiments, the operation that the first node receives the first measurement information sent by the source sensing node includes: receiving at least one of the following in the first measurement information: a translational characteristic measurement of the sensing target, an RCS characteristic measurement of the sensing target, a micro-motion characteristic measurement of the sensing target, a target imaging characteristic measurement of the sensing target, or the like.

In some embodiments, the operation that the first node receives the first characteristic information sent by the source sensing node includes: receiving at least one of the following in the first characteristic information: a translational characteristic of the sensing target, an RCS characteristic of the sensing target, a micro-motion characteristic of the sensing target, a target imaging characteristic of the sensing target, or the like.

In some embodiments, the translational characteristic includes at least one of: a position, velocity, acceleration, latency, or doppler shift, the RCS characteristic includes a reflected signal receive power, the micro-motion characteristic includes micro-doppler characteristic, and the target imaging characteristic includes target classification.

In some embodiments, the source sensing node may perform sensing of the first sensing target by at least one of a reference signal, a visual sensor, an infrared sensor, or the like, obtains first measurement information of the first sensing target from a corresponding sensor or a sensing data source, and sends the first measurement information to the first node.

In some embodiments, the first node sends a first request to the source sensing node.

The first request is used to request that the source sensing node obtains the first characteristic information or the first measurement information. The first characteristic information is characteristic information of a first sensing target sensed by the source sensing node. The first measurement information is used to generate first characteristic information.

In some embodiments, the first measurement information is measurement data used to generate the first characteristic information.

In some embodiments, the first request includes a request for the first characteristic information of the first sensing target or a request for the first measurement information of the first sensing target.

In some embodiments, the first node receives a first response sent by the source sensing node.

The first response includes at least one of the first characteristic information or the first measurement information.

In some embodiments, the source sensing node sends the first characteristic information or the first measurement information to the first node. Optionally, the source sensing node may send the first characteristic information or the first measurement information to the first node through an RRC/sensing protocol. The first node may receive the first characteristic information sent by the source sensing node, or generate the first characteristic information based on the first measurement information sent by the source sensing node and perform processing and decision making according to the first characteristic information.

In some embodiments, the first node extracts first characteristic information based on the first measurement information.

The first characteristic information is characteristic information of a first sensing target sensed by the source sensing node.

In some embodiments, the first node may utilize the first measurement information to extract the first characteristic information.

The first measurement information is measurement information of the first sensing target obtained by the source sensing node, and the first characteristic information is characteristic information of the first sensing target extracted from the first measurement information.

In some embodiments, the source sensing node reports the first measurement information obtained by itself to the first node, and the first node extracts the first characteristic information according to the first measurement information. Optionally, the first node fuses and processes the first measurement information to obtain the first characteristic information.

In some embodiments, the first node receives at least one of: second characteristic information, second measurement information, or matching results sent by the candidate sensing nodes.

The second measurement information is used for generating the second characteristic information, the second characteristic information is characteristic information of a sensing target sensed by the candidate sensing nodes, the matching results are matching results between the first characteristic information and the second characteristic information, and the first characteristic information is characteristic information of the first sensing target sensed by the source sensing node.

In some embodiments, the first node receives a second response sent by the candidate sensing nodes. The second response includes at least one of: the second characteristic information sensed by the candidate sensing target, the second measurement information, or the matching results.

In some embodiments, the operation that the first node receives the second characteristic information sent by the candidate sensing nodes includes: receiving at least one of the following in the second characteristic information: a translational characteristic of the sensing target, an RCS characteristic of the sensing target, a micro-motion characteristic of the sensing target, a target imaging characteristic of the sensing target, or the like.

In some embodiments, the operation that the first node receives the second measurement information sent by the candidate sensing nodes includes: receiving at least one of the following in the second measurement information: translational characteristic measurement of the sensing target, RCS characteristic measurement of the sensing target, micro-motion characteristic measurement of the sensing target, target imaging characteristic measurement of the sensing target, or the like.

In some embodiments, the first node receives a matching result sent by the candidate sensing nodes, and the matching result is used to indicate a matching degree between the first characteristic information and the second characteristic information. When the first characteristic information and the second characteristic information match, the first node switches the source sensing node to a target sensing node, where the target sensing node is a matching candidate sensing node.

In some embodiments, the matching result is obtained by performing similarity calculation on the first characteristic information and the second characteristic information.

In some embodiments, the matching result is indicated using a first bit, and the matching result includes match and mismatch. When the first bit takes a first value, it is used to indicate match between the first characteristic information and the second characteristic information. When the first bit takes a second value, it is used to indicate mismatch between the first characteristic information and the second characteristic information.

In some embodiments, the matching result is indicated by at least two bits, and the matching result represents a matching probability between the first characteristic information and the second characteristic information. The at least two bits have at least three values, each value being used to indicate one matching probability between the first characteristic information and the second characteristic information.

In some embodiments, the first node sends a second request to the candidate sensing nodes.

The second request is used to request that the candidate sensing nodes obtain at least one of the second characteristic information, the second measurement information, or the matching results. The second characteristic information is characteristic information of the sensing target sensed by the candidate sensing nodes. The second measurement information is measurement data for generating the second characteristic information.

In some embodiments, the first node sends a second request to the candidate sensing nodes, the second request carrying the first characteristic information obtained from the source sensing node.

In some embodiments, the first node receives a second response sent by the candidate sensing nodes.

The second response includes at least one of the second characteristic information or the second measurement information, or the matching results.

In some embodiments, the operation that the first node receives the second characteristic information sent by the candidate sensing nodes includes: receiving at least one of the following in the second characteristic information: a translational characteristic of the sensing target, an RCS characteristic of the sensing target, a micro-motion characteristic of the sensing target, a target imaging characteristic of the sensing target, or the like.

In some embodiments, the operation that the first node receives the second measurement information sent by the candidate sensing nodes includes: receiving at least one of the following in the second measurement information: translational characteristic measurement of the sensing target, RCS characteristic measurement of the sensing target, micro-motion characteristic measurement of the sensing target, target imaging characteristic measurement of the sensing target, or the like.

In some embodiments, the first node receives a matching result sent by one or more candidate sensing nodes, and the matching result is used to indicate a matching degree between the first characteristic information and the second characteristic information. When the first characteristic information and the second characteristic information match, the first node switches the source sensing node to a target sensing node, where the target sensing node is a matching candidate sensing node.

In some embodiments, the first node extracts the second characteristic information based on the second measurement information.

The second characteristic information is characteristic information of a sensing target sensed by the candidate sensing nodes.

In some embodiments, the first node may utilize the second measurement information to extract the second characteristic information.

The second measurement information is measurement information of the sensing target obtained by the candidate sensing nodes, and the second characteristic information is characteristic information of the sensing target extracted from the second measurement information.

In some embodiments, the candidate sensing nodes report the second measurement information obtained by themselves to the first node, and the first node extracts the second characteristic information according to the second measurement information. Optionally, the first node fuses and processes the second measurement information to obtain the second characteristic information.

In some embodiments, the first node sends the first characteristic information or the first measurement information to the candidate sensing nodes.

The first measurement information is used to generate the first characteristic information.

In some embodiments, the first node sends a second request to the candidate sensing nodes, the second request carrying first characteristic information or first measurement information obtained from the source sensing node. The first characteristic information or the first measurement information in the second request may be used perform a sensing measurement task by the candidate sensing nodes.

In some embodiments, when the matching result is used to indicate that the first characteristic information and the second characteristic information match, the first node switches the source sensing node to a target sensing node.

The target sensing node is a candidate sensing node corresponding to the matching result.

In some embodiments, the first node receives matching results sent by the candidate sensing nodes, the matching results being used to indicate matching degrees between the first characteristic information and the second characteristic information.

In some embodiments, the first node extracts the first characteristic information based on the first measurement information, extracts the second characteristic information based on the second measurement information, and the first node matches the first characteristic information and the second characteristic information to obtain matching results, where the matching results are used to indicate matching degrees between the first characteristic information and the second characteristic information.

In some embodiments, when the first characteristic information and the second characteristic information match, the first node switches the source sensing node to a target sensing node, where the target sensing node is a candidate sensing node corresponding to the matching result.

In some embodiments, the first node receives capability information reported by the source sensing node and/or the candidate sensing nodes.

The capability information is used to indicate whether the source sensing node and/or the candidate sensing nodes have the capability to ensure continuity of the sensing service. Optionally, the capability information is used to indicate whether the source sensing node and/or the candidate sensing nodes have the capability to extract characteristic information of the sensing target.

In some embodiments, the capability information is used to indicate whether the source sensing node supports the capability of extracting the first characteristic information of the sensing target, or the capability information is used to indicate whether the candidate sensing nodes have the capability of extracting the second characteristic information of the sensing target.

In some embodiments, the first node sends a reporting request for the capability information to the source sensing node and/or the candidate sensing nodes.

In some embodiments, the first node sends a reporting request for the capability information to the source sensing node and/or the candidate sensing nodes. The reporting request for the capability information includes an indication that the source sensing node and/or the candidate sensing nodes provide capability information related to continuity of the sensing service.

In summary, in the method provided by the embodiment of the present application, by obtaining first information sent by a source sensing node and/or candidate sensing nodes, the first node determines whether to switch the source sensing node to a target sensing node based on the first information, where the target sensing node is all or part of the candidate sensing nodes, and the source sensing node and the target sensing node are used to perform a sensing service on a sensing target. This ensures that the sensing target can be uniquely identified when switching between the coverage areas of different sensing nodes, thereby maintaining the continuity of the sensing service.

### Source sensing node side:

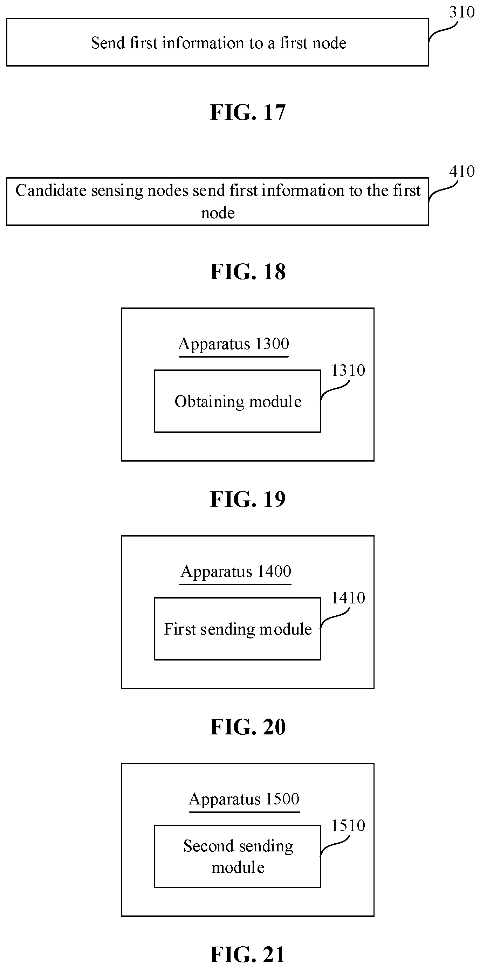

FIG. 17 illustrates a flowchart of a method for execution of sensing service according to an exemplary embodiment of the present application, where the method is jointly executed by a first node, a source sensing node, and candidate sensing nodes. The method includes all or part of the following operation 310.

In operation 310, the source sensing node sends the first information to the first node.

The first information is used to determine whether to switch the source sensing node to a target sensing node. The target sensing node is all or part of the candidate sensing nodes, and the source sensing node and the target sensing node are used to perform a sensing service on a first sensing target. The first sensing target is a current sensing target for which the source sensing node performs the sensing service.

In some embodiments, the source sensing node sends first information to the first node. Optionally, the first information includes first characteristic information or first measurement information.

The first characteristic information is characteristic information of a first sensing target sensed by the source sensing node, and the first measurement information is used to generate the first characteristic information.

In some embodiments, the source sensing node sends the first information to the first node to provide characteristic information or measurement information about the first sensing target to the first node, to assist the first node in determining whether switching of sensing node for the first sensing target is required.

In some embodiments, the source sensing node sends the first characteristic information or the first measurement information to the first node.

The first measurement information is used to generate the first characteristic information, and the first characteristic information is characteristic information of the first sensing target sensed by the source sensing node. The first characteristic information is used to uniquely identify a current sensing target.

The first measurement information is used to generate the first characteristic information, and the first characteristic information is characteristic information of the first sensing target sensed by the source sensing node.

In some embodiments, the operation that the source sensing node sends the first measurement information to the first node includes: sending at least one of the following in the first measurement information: a translational characteristic measurement of the sensing target, an RCS characteristic measurement of the sensing target, a micro-motion characteristic measurement of the sensing target, a target imaging characteristic measurement of the sensing target, or the like.

In some embodiments, the operation that the source sensing node sends the first characteristic information to the first node includes: sending at least one of the following in the first characteristic information: a translational characteristic of the sensing target, an RCS characteristic of the sensing target, a micro-motion characteristic of the sensing target, a target imaging characteristic of the sensing target, or the like.

In some embodiments, the translational characteristic includes at least one of: a position, velocity, acceleration, latency, or doppler shift, the RCS characteristic includes reflected signal receive power, the micro-motion characteristic includes micro-doppler characteristic, and the target imaging characteristic includes target classification.

In some embodiments, the source sensing node may perform sensing of the first sensing target by at least one of a reference signal, a visual sensor, an infrared sensor, or the like, obtains first measurement information of the first sensing target from a corresponding sensor or a sensing data source, and sends the first measurement information to the first node.

In some embodiments, the source sensing node receives a first request sent by the first node.

The first request is used to request that the source sensing node obtains the first characteristic information or the first measurement information. The first characteristic information is characteristic information of a first sensing target sensed by the source sensing node. The first measurement information is used to generate first characteristic information.

In some embodiments, the first measurement information is measurement data used to generate the first characteristic information.

In some embodiments, the first request includes a request for the first characteristic information of the first sensing target or a request for the first measurement information of the first sensing target.

In some embodiments, the source sensing node sends a first response to the first node.

The first response includes at least one of the first characteristic information or the first measurement information.

In some embodiments, the source sensing node sends the first characteristic information or the first measurement information to the first node. Optionally, the source sensing node may send the first characteristic information or the first measurement information to the first node through an RRC/sensing protocol.

In some embodiments, the source sensing node reports capability information to the first node.

The capability information is used to indicate whether the source sensing node has the capability to ensure continuity of the sensing service. Optionally, the capability information is used to indicate whether the source sensing node has the capability to obtain characteristic information of a sensing target. For example, the capability information is used to indicate whether the source sensing node supports the capability to extract the first characteristic information of the sensing target.

In some embodiments, the source sensing node receives a reporting request for the capability information sent by the first node.

In some embodiments, the source sensing node reports the capability information to the first node based on the reporting request for the capability information from the first node. The reporting request for the capability information includes an indication that the source sensing node provides capability information related to continuity of the sensing service.

In summary, in the method provided by the embodiment of the present application, the source sensing node sends first information to the first node, and the first node determines whether to switch the source sensing node to a target sensing node based on the first information, where the target sensing node is all or part of the candidate sensing nodes, and the source sensing node and the target sensing node are used to perform a sensing service on the sensing target. This ensures that the sensing target can be uniquely identified when switching between the coverage areas of different sensing nodes, thereby maintaining the continuity of the sensing service.

### Candidate sensing nodes side:

FIG. 18 illustrates a flowchart of a method for execution of sensing service according to an exemplary embodiment of the present application, where the method is jointly executed by a first node, a source sensing node, and candidate sensing nodes. The method includes all or part of the following operation 410.

In operation 410, the candidate sensing nodes send first information to the first node.

The first information is used to determine whether to switch the source sensing node to a target sensing node, the target sensing node is all or part of the candidate sensing nodes, and the source sensing node and the target sensing node are used to perform a sensing service on a first sensing target.

In some embodiments, the candidate sensing nodes send first information to the first node. Optionally, the first information includes at least one of second characteristic information, second measurement information, or matching results.

The second characteristic information is characteristic information of a sensing target sensed by the candidate sensing nodes, the second measurement information is used to generate the second characteristic information, the matching result is a matching result between the first characteristic information and the second characteristic information, and the matching result is used to indicate a matching degree between the first characteristic information and the second characteristic information.

In some embodiments, the candidate sensing nodes sends the first information to the first node to provide to the first node at least one of: characteristic information, measurement information, or matching results about the sensing target, to assist the first node in determining whether switching of a sensing node for the first sensing target is required.

In some embodiments, the candidate sensing nodes send to the first node at least one of the second characteristic information or the second measurement information, or the matching result.

The second measurement information is used to generate the second characteristic information, the second characteristic information is characteristic information of a sensing target sensed by the candidate sensing nodes, and the matching result is a matching result between the first characteristic information and the second characteristic information, and the first characteristic information is characteristic information of a sensing target sensed by the source sensing node. The second characteristic information is used to uniquely identify a current sensing target.

In some embodiments, the operation that the candidate sensing nodes send the second measurement information to the first node includes: sending at least one of the following in the first measurement information: a translational characteristic measurement of the sensing target, an RCS characteristic measurement of the sensing target, a micro-motion characteristic measurement of the sensing target, a target imaging characteristic measurement of the sensing target, or the like.

In some embodiments, the operation that the candidate sensing nodes send the second characteristic information to the first node, including: sending at least one of the following in the first characteristic information: a translational characteristic of the sensing target, an RCS characteristic of the sensing target, a micro-motion characteristic of the sensing target, a target imaging characteristic of the sensing target, or the like.

In some embodiments, the translational characteristic includes at least one of: position, velocity, acceleration, latency, or doppler shift, the RCS characteristic includes reflected signal receive power, the micro-motion characteristic includes a micro-doppler characteristic, and the target imaging characteristic includes target classification. In some embodiments, the candidate sensing nodes may perform sensing of the sensing target by at least one of a reference signal, a visual sensor, an infrared sensor, or the like, obtain second measurement information of the sensing target from a corresponding sensor or a sensing data source, and send the second measurement information to the first node.

In some embodiments, the candidate sensing nodes send matching results to the first node, the matching results are used to indicate matching degrees between the first characteristic information and the second characteristic information. When the first characteristic information and the second characteristic information match, the first node switches the source sensing node to a target sensing node, where the target sensing node is a matching candidate sensing node.

In some embodiments, the candidate sensing nodes receive a second request sent by the first node.

The second request is used to request that the candidate sensing nodes obtain at least one of the second characteristic information, the second measurement information, or the matching result. The second characteristic information is characteristic information of the sensing target sensed by the candidate sensing nodes. The second measurement information is measurement data used for generating the second characteristic information.

In some embodiments, the candidate sensing nodes receive a second request sent by the first node, the second request carrying the first characteristic information obtained from the source sensing node.

In some embodiments, the candidate sensing nodes send a second response to the first node.

The second response includes at least one of the second characteristic information or the second measurement information, or the matching result.

In some embodiments, the candidate sensing nodes send to the first node at least one of the second characteristic information or the second measurement information, or the matching result. Optionally, the candidate sensing nodes may send at least one of the second characteristic information or the second measurement information, or the matching result to the first node through an RRC/sensing protocol.

In some embodiments, the candidate sensing nodes receive the first characteristic information or the first measurement information sent by the first node.

The first measurement information is used to generate the first characteristic information.

In some embodiments, the candidate sensing nodes receive a second request sent by the first node, the second request carrying first characteristic information or first measurement information obtained from the source sensing node. The first characteristic information or the first measurement information in the second request may be used for the candidate sensing nodes to perform a sensing measurement task.

In some embodiments, the candidate sensing nodes report capability information to the first node.

The capability information is used to indicate whether the candidate sensing nodes have capabilities to ensure continuity of the sensing service. Optionally, the capability information is used to indicate whether the candidate sensing nodes have capabilities to obtain characteristic information of a sensing target. For example, the capability information is used to indicate whether the candidate sensing nodes support capabilities to extract the second characteristic information of the sensing target.

In some embodiments, the candidate sensing nodes receive a reporting request for the capability information sent by the first node.

In some embodiments, the candidate sensing nodes report the capability information to the first node based on the reporting request for the capability information from the first node. The reporting request for the capability information includes an indication that the source sensing node provides capability information related to continuity of the sensing service.

In summary, in the method provided by the embodiment of the present application, the candidate sensing nodes send first information to the first node, and the first node determines whether to switch the source sensing node to a target sensing node based on the first information, where the target sensing node is all or part of the candidate sensing nodes, and the source sensing node and the target sensing node are used to perform a sensing service on a sensing target. This ensures that the sensing target can be uniquely identified when switching between the coverage areas of different sensing nodes, thereby maintaining the continuity of the sensing service.

### Apparatus of First node side:

FIG. 19 illustrates a structural block diagram of an apparatus of a first node provided by an exemplary embodiment of the present application. The apparatus 1300 has a function of realizing the method for execution of sensing service described above. The apparatus of the first node may include: an obtaining module 1310.

The obtaining module 1310 is configured to obtain first information sent by a source sensing node and/or candidate sensing nodes.

The first information is used to determine whether to switch the source sensing node to a target sensing node. The first information is reference information used for assisting the apparatus of the first node in determining whether switching of a sensing node for a sensing target is required.

The target sensing node is all or part of the candidate sensing nodes, and the source sensing node and the target sensing node are used to perform a sensing service on a first sensing target. Optionally, the first sensing target may be a passive sensing target that does not have signal transmission or reception capabilities.

In some embodiments, the source sensing node is a node that is currently performing a sensing service, and the candidate sensing nodes are other nodes that may be used for switching as a target sensing node during execution of the sensing service. The first sensing target is a current sensing target for which the source sensing node performs the sensing service.

In some embodiments, the first information is information sent by the source sensing node to the apparatus of the first node, and/or information sent by the candidate sensing nodes to the apparatus of the first node.

In some embodiments, the apparatus of the first node is a sensing server node, playing the role and function of decision making and control. The apparatus of the first node is responsible for receiving the first information sent by the source sensing node and the candidate sensing nodes, and determining whether to switch the source sensing node to the target sensing node based on the first information. Optionally, the first information includes characteristic information about a sensing target.

In some embodiments, the apparatus of the first node may evaluate a current sensing situation, status of sensing nodes, and availability and adaptability of the candidate sensing nodes according to the characteristic information of the sensing target, to determine whether switching of sensing node is required.

In some embodiments, the first information includes first information sent by the source sensing node, or the first information includes first information sent by the candidate sensing nodes, or the first information includes first information sent by the source sensing node and the candidate sensing nodes.

In some embodiments, the first information is first characteristic information or first measurement information sent by the source sensing node, and/or the first information includes at least one of: second characteristic information, second measurement information, or matching results sent by the candidate sensing nodes.

The first characteristic information is characteristic information of the first sensing target sensed by the source sensing node, and the first measurement information is used to generate the first characteristic information.

In some embodiments, the apparatus of the first node further includes a receiving module.

The receiving module is configured to receive first characteristic information or first measurement information sent by the source sensing node.

The first measurement information is used to generate the first characteristic information, and the first characteristic information is characteristic information of the first sensing target sensed by the source sensing node. The first characteristic information is used to uniquely identify a current sensing target. The first sensing target is a current sensing target for which the source sensing node performs the sensing service.

In some embodiments, the apparatus of the first node receives a first response sent by the source sensing node. The first response includes: the first characteristic information sensed by the source sensing target or the first measurement information.

In some embodiments, the apparatus of the first node receives the first measurement information sent by the source sensing node, including: receiving at least one of the following in the first measurement information: translational characteristic measurement of the sensing target, RCS characteristic measurement of the sensing target, micro-motion characteristic measurement of the sensing target, target imaging characteristic measurement of the sensing target, and the like.

In some embodiments, the apparatus of the first node receives the first characteristic information sent by the source sensing node, including: receiving at least one of the following in the first characteristic information: translational characteristic of the sensing target, RCS characteristic of the sensing target, micro-motion characteristic of the sensing target, target imaging characteristic of the sensing target, or the like.

In some embodiments, the translational characteristic includes at least one of: position, velocity, acceleration, latency, or doppler shift, the RCS characteristic includes reflected signal receive power, the micro-motion characteristic includes a micro-doppler characteristic, and the target imaging characteristic includes target classification.

In some embodiments, the source sensing node may perform sensing of the sensing target by at least one of a reference signal, a visual sensor, an infrared sensor, or the like, obtain first measurement information of the sensing target from a corresponding sensor or a sensing data source, and send the first measurement information to the apparatus of the first node.

In some embodiments, the apparatus of the first node further includes a sending module.

The sending module is configured to send a first request to the source sensing node.

The first request is used to request that the source sensing node obtains the first characteristic information or the first measurement information. The first characteristic information is characteristic information of a first sensing target sensed by the source sensing node. The first measurement information is used to generate first characteristic information.

In some embodiments, the first measurement information is measurement data used to generate the first characteristic information.

In some embodiments, the first request includes a request for the first characteristic information of the first sensing target or a request for the first measurement information of the first sensing target.

The receiving module is configured to receive a first response sent by the source sensing node.

The first response includes at least one of the first characteristic information or the first measurement information.

In some embodiments, the source sensing node sends the first characteristic information or the first measurement information to the apparatus of the first node. Optionally, the source sensing node may send the first characteristic information or the first measurement information to the apparatus of the first node through an RRC/sensing protocol. The apparatus of the first node may receive the first characteristic information sent by the source sensing node, or generate the first characteristic information based on the first measurement information sent by the source sensing node, and process and make decisions according to corresponding characteristic information of the sensing target in the first characteristic information.

In some embodiments, the apparatus of the first node further includes an extracting module.

The extracting module is configured to extract first characteristic information based on the first measurement information.

The first characteristic information is characteristic information of the sensing target sensed by the source sensing node.

In some embodiments, the apparatus of the first node may utilize the first measurement information to extract the first characteristic information.

The first measurement information is measurement information of the first sensing target obtained by the source sensing node, and the first characteristic information is characteristic information of the first sensing target extracted from the first measurement information.

In some embodiments, the source sensing node reports the first measurement information obtained by itself to the apparatus of the first node, and the apparatus of the first node extracts the first characteristic information according to the first measurement information. Optionally, the apparatus of the first node fuses and processes the first measurement information to obtain the first characteristic information.

The receiving module is configured to receive at least one of second characteristic information, second measurement information, or a matching result sent by the candidate sensing nodes.

The second measurement information is used to generate second characteristic information, the second characteristic information is characteristic information of a sensing target sensed by the candidate sensing nodes, and the matching result is a matching result between the first characteristic information and the second characteristic information, and the first characteristic information is characteristic information of a sensing target sensed by the source sensing node.

In some embodiments, the apparatus of the first node receives a second response sent by the candidate sensing nodes. The second response includes at least one of: the second characteristic information sensed by the candidate sensing target, the second measurement information, or the matching result.

In some embodiments, the apparatus of the first node receives the second characteristic information sent by the candidate sensing nodes, including: receiving at least one of the following in the second characteristic information: translational characteristic of the sensing target, RCS characteristic of the sensing target, micro-motion characteristic of the sensing target, target imaging characteristic of the sensing target, and the like.

In some embodiments, the apparatus of the first node receives the second measurement information sent by the candidate sensing nodes, including: receiving at least one of the following in the second measurement information: translational characteristic of the sensing target, RCS characteristic of the sensing target, micro-motion characteristic of the sensing target, target imaging characteristic of the sensing target, or the like.

In some embodiments, the apparatus of the first node receives a matching result sent by the candidate sensing nodes, and the matching result is used to indicate a matching degree between the first characteristic information and the second characteristic information. When the first characteristic information and the second characteristic information match, the first node switches the source sensing node to a target sensing node, where the target sensing node is a matching candidate sensing node.

In some embodiments, the matching result is obtained by performing similarity calculation on the first characteristic information and the second characteristic information.

In some embodiments, the matching result is indicated using a first bit, and the matching result includes match and mismatch. When the first bit takes a first value, it is used to indicate match between the first characteristic information and the second characteristic information. When the first bit takes a second value, it is used to indicate mismatch between the first characteristic information and the second characteristic information.

In some embodiments, the matching result is indicated by at least two bits, and the matching result represents a matching probability between the first characteristic information and the second characteristic information. The at least two bits have at least three values, each value being used to indicate one matching probability between the first characteristic information and the second characteristic information.

The sending module is configured to send a second request to the candidate sensing nodes.

The second request is used to request that the candidate sensing nodes obtain at least one of the second characteristic information, the second measurement information, or the matching result. The second characteristic information is characteristic information of the sensing target sensed by the candidate sensing nodes. The second measurement information is measurement data used for generating the second characteristic information.

In some embodiments, the apparatus of the first node sends a second request to the candidate sensing nodes, the second request carrying the first characteristic information obtained from the source sensing node.

The receiving module is configured to receive a second response sent by the candidate sensing nodes.

The second response includes at least one of the second characteristic information or the second measurement information, or the matching result.

In some embodiments, the apparatus of the first node receives the second characteristic information sent by the candidate sensing nodes, including: receiving at least one of the following in the second characteristic information: a translational characteristic of the sensing target, an RCS characteristic of the sensing target, a micro-motion characteristic of the sensing target, a target imaging characteristic of the sensing target, or the like.

In some embodiments, the apparatus of the first node receives the second measurement information sent by the candidate sensing nodes, including: receiving at least one of the following in the second measurement information: a translational characteristic of the sensing target, an RCS characteristic of the sensing target, a micro-motion characteristic of the sensing target, a target imaging characteristic of the first sensing target, or the like.

In some embodiments, the apparatus of the first node receives the matching result sent by the candidate sensing nodes, and the matching result is used to indicate a matching degree between the first characteristic information and the second characteristic information. When the first characteristic information and the second characteristic information match, the first node switches the source sensing node to a target sensing node, where the target sensing node is a matching candidate sensing node.

The extracting module is configured to extract second characteristic information based on the second measurement information.

The second characteristic information is characteristic information of a sensing target sensed by the candidate sensing nodes.

In some embodiments, the apparatus of the first node may utilize the second measurement information to extract the second characteristic information.

The second measurement information is measurement information of the sensing target obtained by the candidate sensing nodes, and the second characteristic information is characteristic information of the sensing target extracted from the second measurement information.

In some embodiments, the candidate sensing nodes report the second measurement information obtained by itself to the apparatus of the first node, and the apparatus of the first node extracts the second characteristic information according to the second measurement information. Optionally, the apparatus of the first node fuses and processes the second measurement information to obtain the second characteristic information.

The sending module is configured to send the first characteristic information or the first measurement information to the candidate sensing nodes.

The first measurement information is used to generate the first characteristic information.

In some embodiments, the apparatus of the first node sends a second request to the candidate sensing nodes, the second request carrying first characteristic information or first measurement information obtained from the source sensing node. The first characteristic information or the first measurement information in the second request may be used for the candidate sensing nodes to perform a sensing measurement task.

In some embodiments, the apparatus of the first node further includes a switching module.

The switching module is configured to switch the source sensing node to a target sensing node.

The target sensing node is a candidate sensing node corresponding to the matching result.

In some embodiments, the apparatus of the first node receives a matching result sent by the candidate sensing nodes, the matching result being used to indicate a matching degree between the first characteristic information and the second characteristic information.

In some embodiments, the apparatus of the first node extracts the first characteristic information based on the first measurement information, and extracts the second characteristic information based on the second measurement information. The apparatus of the first node matches the first characteristic information with the second characteristic information to obtain a matching result, where the matching result is used to indicate a matching degree between the first characteristic information and the second characteristic information.

In some embodiments, when the first characteristic information and the second characteristic information match, the apparatus of the first node switches the source sensing node to a target sensing node, where the target sensing node is a candidate sensing node corresponding to the matching result.

The receiving module is configured to receive capability information reported by the source sensing node and/or the candidate sensing nodes.

The capability information is used to indicate whether the source sensing node and/or the candidate sensing nodes have the capability to ensure continuity of the sensing service. Optionally, the capability information is used to indicate whether the source sensing node and/or the candidate sensing nodes have the capability to extract characteristic information of the sensing target.

The sending module is configured to send a reporting request for the capability information to the source sensing node and/or the candidate sensing nodes.

In some embodiments, the apparatus of the first node sends a reporting request for the capability information to the source sensing node and/or the candidate sensing nodes, and the reporting request for the capability information includes an indication that the source sensing node and/or the candidate sensing nodes provide capability information related to continuity of the sensing service.

In summary, in the method provided by the embodiment of the present application, the apparatus of the first node obtains first information sent by the source sensing node and/or the candidate sensing node to determine whether to switch the source sensing node to the target sensing node based on the first information, where the target sensing node is all or part of the candidate sensing node, and the source sensing node and the target sensing node are used to perform a sensing service on a sensing target. This ensures that the sensing target can be uniquely identified when switching between the coverage areas of different sensing nodes, thereby maintaining the continuity of the sensing service.

### Apparatus of Source sensing node side:

FIG. 20 is a structural block diagram of an apparatus of a source sensing mode provided by an embodiment of the present application. The apparatus 1400 has a function of realizing the method for execution of sensing service as described above. The apparatus of the source sensing node may include: a first sending module 1410.

The first sending module 1410 is configured to send first information to a first node.

The first information is used to determine whether to switch the apparatus of the source sensing node to a target sensing node. The target sensing node is all or part of candidate sensing nodes, and the apparatus of the source sensing node and the target sensing node are used to perform a sensing service on the first sensing target. The first sensing target is a current sensing target for which the apparatus of the source sensing node performs the sensing service.

In some embodiments, the apparatus of the source sensing node sends first information to the first node. Optionally, the first information includes first characteristic information or first measurement information.

The first characteristic information is characteristic information of a sensing target sensed by the apparatus of the source sensing node, and the first measurement information is used to generate the first characteristic information.

In some embodiments, the apparatus of the source sensing node sends the first information to the first node to provide characteristic information or measurement information about the first sensing target to the first node, to assist the first node in determining whether switching of a sensing node for the first sensing target is required.

The first sending module 1410 is configured to send first characteristic information or first measurement information to the first node.

The first measurement information is used to generate the first characteristic information, and the first characteristic information is characteristic information of the first sensing target sensed by the apparatus of the source sensing node. The first characteristic information is used to uniquely identify a current sensing target.

The first measurement information is used to generate the first characteristic information, and the first characteristic information is characteristic information of the first sensing target sensed by the apparatus of the source sensing node.

In some embodiments, the apparatus of the source sensing node sends the first measurement information to the first node, including: sending at least one of the following in the first measurement information: a translational characteristic measurement of the sensing target, an RCS characteristic measurement of the sensing target, a micro-motion characteristic measurement of the sensing target, a target imaging characteristic measurement of the sensing target, or the like.

In some embodiments, the apparatus of the source sensing node sends the first characteristic information to the first node, including: sending at least one of the following in the first characteristic information: a translational characteristic of the sensing target, an RCS characteristic of the sensing target, a micro-motion characteristic of the sensing target, a target imaging characteristic of the sensing target, or the like.

In some embodiments, the translational characteristic includes at least one of: position, velocity, acceleration, latency, or doppler shift, the RCS characteristic includes reflected signal receive power, the micro-motion characteristic includes micro-doppler characteristic, and the target imaging characteristic includes a target classification.

In some embodiments, the apparatus of the source sensing node may perform sensing of the first sensing target by at least one of a reference signal, a visual sensor, an infrared sensor, or the like, obtain first measurement information of the first sensing target from a corresponding sensor or a sensing data source, and sends the first measurement information to the first node.

In some embodiments, the apparatus of the first node further includes a receiving module.

The receiving module is configured to receive a first request sent by the first node.

The first request is used to request that the apparatus of the source sensing node obtains first characteristic information or first measurement information. The first characteristic information is characteristic information of the first sensing target sensed by the apparatus of the source sensing node. The first measurement information is used to generate first characteristic information.

In some embodiments, the first measurement information is measurement data used to generate the first characteristic information.

In some embodiments, the first request includes a request for the first characteristic information of the first sensing target or a request for the first measurement information of the first sensing target.

The first sending module 1410 is configured to send a first response to the first node.

The first response includes at least one of the first characteristic information or the first measurement information.

In some embodiments, the apparatus of the source sensing node sends the first characteristic information or the first measurement information to the first node. Optionally, the source sensing node may send the first characteristic information or the first measurement information to the first node through an RRC/sensing protocol.

In some embodiments, the apparatus of the source sensing node further includes a reporting module.

The reporting module is configured to report capability information to the first node.

The capability information is used to indicate whether the apparatus of the source sensing node has capability to ensure continuity of the sensing service. Optionally, the capability information is used to indicate whether the apparatus of the source sensing node has capability to obtain characteristic information of the first sensing target. For example, the capability information is used to indicate whether the apparatus of the source sensing node supports a capability to extract the first characteristic information of the first sensing target.

The receiving module is configured to receive a reporting request for the capability information sent by the first node.

In some embodiments, the apparatus of the source sensing node reports the capability information to the first node based on the reporting request for the capability information of the first node. The reporting request for the capability information includes an indication that the apparatus of the source sensing node provides capability information related to continuity of the sensing service.

In summary, in the method provided by the embodiment of the present application, the apparatus of the source sensing node sends first information to the first node, and the first node determines whether to switch the apparatus of the source sensing node to a target sensing node based on the first information, where the target sensing node is all or part of the candidate sensing nodes, and the apparatus of the source sensing node and the target sensing node are used to perform sensing services on a sensing target. This ensures that the sensing target can be uniquely identified when switching between the coverage areas of different sensing nodes, thereby maintaining the continuity of the sensing services.

### Apparatus of Candidate sensing nodes side:

FIG. 21 is a structural block diagram of an apparatus of a candidate sensing mode provided by an embodiment of the present application. The apparatus 1500 has a function of realizing the method for execution of sensing service as described above. The apparatus of the candidate sensing nodes may include: a second sending module 1510.

The second sending module 1510 is configured to send first information to a first node.

The first information is used to determine whether to switch a source sensing node to a target sensing node. The target sensing node is all or part of nodes in the apparatus of the candidate sensing nodes, and the source sensing node and the target sensing node are used to perform sensing services on a sensing target.

In some embodiments, the apparatus of the candidate sensing node sends first information to the first node. Optionally, the first information includes at least one of second characteristic information, second measurement information, or a matching result.

The second characteristic information is characteristic information of a sensing target sensed by the apparatus of the candidate sensing nodes, the second measurement information is used to generate the second characteristic information, the matching result is a matching result between the first characteristic information and the second characteristic information, and the matching result is used to indicate a matching degree between the first characteristic information and the second characteristic information.

In some embodiments, the apparatus of the candidate sensing nodes sends first information to the first node to provide at least one of characteristic information or measurement information or a matching result about the sensing target to the first node, to assist the first node in determining whether switching of a sensing node for the sensing target is required.

The second sending module 1510 is configured to send at least one of second characteristic information, second measurement information, or a matching result to the first node.

The second measurement information is used to generate second characteristic information, the second characteristic information is characteristic information of a sensing target sensed by the apparatus of the candidate sensing nodes, and the matching result is a matching result between the first characteristic information and the second characteristic information, and the first characteristic information is characteristic information of a sensing target sensed by the source sensing node. The second characteristic information is used to uniquely identify a current sensing target.

In some embodiments, the apparatus of the candidate sensing nodes sends the second measurement information to the first node, including: sending at least one of the following in the first measurement information: a translational characteristic measurement of the sensing target, an RCS characteristic measurement of the sensing target, a micro-motion characteristic measurement of the sensing target, a target imaging characteristic measurement of the sensing target, or the like.

In some embodiments, the apparatus of the candidate sensing nodes sends the second characteristic information to the first node, including: sending at least one of the following in the first characteristic information: a translational characteristic of the sensing target, an RCS characteristic of the sensing target, a micro-motion characteristic of the sensing target, a target imaging characteristic of the sensing target, or the like.

In some embodiments, the translational characteristic includes at least one of: position, velocity, acceleration, latency, or doppler shift, the RCS characteristic includes reflected signal receive power, the micro-motion characteristic includes a micro-doppler characteristic, and the target imaging characteristic includes target classification. In some embodiments, the apparatus of the candidate sensing nodes may perform sensing of the sensing target by at least one of a reference signal, a visual sensor, an infrared sensor, or the like, obtain second measurement information of the sensing target from a corresponding sensor or a sensing data source, and send the second measurement information to the first node.

In some embodiments, the apparatus of the candidate sensing nodes sends a matching result to the first node, the matching result being used to indicate a matching degree between the first characteristic information and the second characteristic information. When the first characteristic information and the second characteristic information match, the first node switches the source sensing node to a target sensing node, where the target sensing node is a matching apparatus of a candidate sensing node.

In some embodiments, the apparatus of the candidate sensing nodes further includes a receiving module.

The receiving module is configured to receive a first request sent by the first node.

The second request is used to request the apparatus of the candidate sensing nodes to obtain at least one of second characteristic information, second measurement information, or a matching result. The second characteristic information is characteristic information of the sensing target sensed by the apparatus of the candidate sensing nodes. The second measurement information is measurement data used for generating the second characteristic information.

In some embodiments, the apparatus of the candidate sensing nodes receives a second request sent by the first node, the second request carrying the first characteristic information obtained from the source sensing node.

The second sending module 1510 is configured to send a second response to the first node.

The second response includes at least one of: the second characteristic information or the second measurement information, or the matching result.

In some embodiments, the apparatus of the candidate sensing nodes sends at least one of the second characteristic information or the second measurement information, or the matching result to the first node. Optionally, the apparatus of the candidate sensing nodes may send at least one of the second characteristic information or the second measurement information, or the matching result to the first node through an RRC/sensing protocol.

The receiving module is configured to receive the first characteristic information or the first measurement information sent by the first node.

The first measurement information is used to generate the first characteristic information.

In some embodiments, the apparatus of the candidate sensing nodes receives a second request sent by the first node, the second request carrying first characteristic information or first measurement information obtained from the source sensing node. The first characteristic information or the first measurement information in the second request may be used to perform a sensing measurement task by the apparatus of the candidate sensing nodes.

In some embodiments, the apparatus of the candidate sensing nodes further includes a reporting module.

The reporting module is configured to report capability information to the first node.

The capability information is used to indicate whether the apparatus of the candidate sensing nodes has capability to ensure continuity of the sensing service. Optionally, the capability information is used to indicate whether the apparatus of the candidate sensing nodes has capability to obtain characteristic information of a sensing target. For example, the capability information is used to indicate whether the apparatus of the candidate sensing nodes supports the capability to extract the second characteristic information of the sensing target.

The receiving module is configured to receive a reporting request for the capability information sent by the first node.

In some embodiments, the apparatus of the candidate sensing nodes reports the capability information to the first node based on the reporting request for the capability information of the first node. The reporting request for the capability information includes an indication that the apparatus of the candidate sensing nodes provides capability information related to continuity of the sensing service.

In summary, in the method provided by the embodiment of the present application, the apparatus of the candidate sensing nodes sends first information to the first node, and the first node determines whether to switch the source sensing node to a target sensing node based on the first information, where the target sensing node is all or part of nodes in the apparatus of the candidate sensing nodes, and the source sensing node and the target sensing node are used to perform sensing services on the sensing target. This ensures that the sensing target can be uniquely identified when switching between the coverage areas of different sensing nodes, thereby maintaining the continuity of the sensing services.

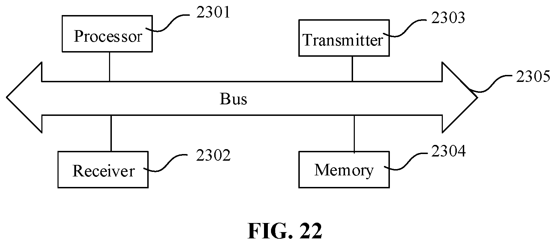

FIG. 22 is a block diagram of a communication device provided by an embodiment of the present application. The communication device may be used to implement the methods for execute a sensing service provided in the above embodiments. The sensing device may include a processor 2301, a transceiver 2302, a transmitter 2303, a memory 2304, and a bus 2305.

The processor 2301 includes one or more processing cores, and the processor 2301 runs software programs and modules to perform various functional applications and information processing.

The receiver 2302 and the transmitter 2303 may be implemented as a transceiver, which may be a communication chip.

The memory 2304 is connected to the processor 2301 via the bus 2305. In some embodiments, the processor 2301 may be implemented as a first Integrated Circuit (IC) chip, and the processor 2301 and memory 2304 may be jointly implemented as a second IC chip. The first chip or the second chip may be an Application Specific Integrated Circuit (ASIC) chip.

The memory 2304 may be configured to store at least one computer program, and the processor 2301 is configured to execute the at least one computer program to implement various operations performed by the communication system in the above method embodiments.

Further, the memory 2304 may be implemented in any type of volatile or non-volatile storage device, or their combination. The volatile or non-volatile storage device includes, but not limited to, a Random-Access Memory (RAM), a Read-Only Memory (ROM), an Erasable Programmable Read-Only Memory (EPROM), an Electrically Erasable Programmable Read-Only Memory (EEPROM), a flash Memory or other solid state storage technology, a Compact Disc Read-Only Memory (CD-ROM), a Digital Video Disc (DVD) or other optical storage, tape cassette, magnetic tape, magnetic disk storage, or other magnetic storage device.

In an exemplary embodiment, there is also provided a chip including programmable logic circuitry and/or program instructions, where the chip, when running on a multi-link device, is configured to implement the method for execution of sensing service as described above.

In an exemplary embodiment, there is also provided a computer-readable storage medium having stored therein a computer program that, when executed by a processor, cause to implement the method for execution of sensing service as described above.

In an exemplary embodiment, there is also provided a computer program product that, when executed by a processor, is configured to implement the method for execution of sensing service as described above.

It is to be understood that the "multiple" mentioned herein refers to two or more. The term "and/or" herein describes an association relationship between associated objects, representing that there may be three kinds of relationships. For example, A and/or B may represent the following three situations: i.e., independent existence of A, existence of both A and B, and independent existence of B. In addition the character "/" generally represents that an "or" relationship is formed between the previous and next associated objects. In addition, the numbering of operations described herein only illustrates one possible execution order among the operations, and in some other embodiments, the above operations may not be executed in the order of numbering, for example, two different numbered operations may be executed simultaneously, or two different numbered operations may be executed in the reverse order as illustrated, which is not limited in the embodiment of the present application.

The above are only optional embodiments of the present application, and are not intended to limit the present application. Any modification, equivalent substitution, improvement, etc. made within the spirit and principle of the present application shall be included in the scope of protection of the present application.

## Claims

1. A method for execution of sensing service, the method being performed by a first node and comprising:
obtaining first information from a source sensing node and/or candidate sensing nodes, the first information being used to determine whether to switch the source sensing node to a target sensing node,
wherein the target sensing node is all or part of the candidate sensing nodes, and the source sensing node and the target sensing node are used to perform a sensing service on a first sensing target.

2. The method of claim 1, wherein the first node and the source sensing node are different nodes, and the obtaining the first information from the source sensing node comprises:
receiving first characteristic information or first measurement information from the source sensing node,
wherein the first measurement information is used to generate the first characteristic information, and the first characteristic information is characteristic information of the first sensing target sensed by the source sensing node.

3. The method of claim 2, further comprising:
sending a first request to the source sensing node, the first request being used to request that the source sensing node obtains the first measurement information; and
receiving a first response from the source sensing node, the first response comprising at least one of the first characteristic information or the first measurement information.

4. The method of claim 1, wherein the first node and the source sensing node are the same node, and the obtaining the first information from the source sensing node comprises:
extracting first characteristic information based on first measurement information,
wherein the first characteristic information is characteristic information of the first sensing target sensed by the source sensing node.

5. The method of any one of claims 2 to 4, wherein the first characteristic information comprises at least one of the following:
translational characteristic of the sensing target;
radar cross-section (RCS) characteristic of the sensing target;
micro-motion characteristic of the sensing target; or
target imaging characteristic of the sensing target.

6. The method of claim 5, wherein the translational characteristic comprises at least one of: position, velocity, acceleration, latency, or doppler shift, the RCS characteristic comprises reflected signal receive power, the micro-motion characteristic comprises micro-doppler characteristic, and the target imaging characteristic comprises target classification.

7. The method of claim 1, wherein the obtaining the first information from the candidate sensing nodes comprises:
receiving at least one of second characteristic information, second measurement information, or a matching result from the candidate sensing nodes,
wherein the second measurement information is used to generate the second characteristic information, the second characteristic information is characteristic information of a sensing target sensed by the candidate sensing nodes, the matching result is a matching result between the first characteristic information and the second characteristic information, and the first characteristic information is characteristic information of the first sensing target sensed by the source sensing node.

8. The method of claim 7, further comprising:
sending a second request to the candidate sensing nodes, the second request being used to request that the candidate sensing nodes obtain the second measurement information; and
receiving a second response from the candidate sensing nodes, the second response comprising at least one of the second characteristic information, the second measurement information, or the matching result.

9. The method of claim 8, wherein the obtaining the first information from the candidate sensing nodes comprises:
extracting the second characteristic information based on the second measurement information,
wherein the second characteristic information is characteristic information of the sensing target sensed by the candidate sensing nodes.

10. The method of any one of claims 7 to 9, wherein the second characteristic information comprises at least one of the following:
translational characteristic of the sensing target;
RCS characteristic of the sensing target;
micro-motion characteristic of the sensing target; or
target imaging characteristic of the sensing target.

11. The method of claim 10, wherein the translational characteristic comprises at least one of: position, velocity, acceleration, latency, or doppler shift, the RCS characteristic comprises a reflected signal receive power, the micro-motion characteristic comprises micro-doppler characteristic, and the target imaging characteristic comprises target classification.

12. The method of claim 7, further comprising:
sending the first characteristic information or first measurement information to the candidate sensing nodes,
wherein the first measurement information is used to generate the first characteristic information.

13. The method of claim 7 or 8, wherein the matching result comprises a first bit,
when the first bit takes a first value, it indicates that the first characteristic information matches the second characteristic information;
when the first bit takes a second value, it indicates that the first characteristic information and the second characteristic information do not match.

14. The method of claim 13, wherein the matching result comprises at least two bits, the at least two bits have at least three values, and each of the at least three values is used to indicate a matching probability between the first characteristic information and the second characteristic information.

15. The method of any one of claims 7 to 14, further comprising:
switching the source sensing node to the target sensing node, when the matching result is used to indicate that the first characteristic information matches the second characteristic information,
wherein the target sensing node is a candidate sensing node corresponding to the matching result.

16. The method of any one of claims 1 to 15, further comprising:
receiving capability information reported by the source sensing node and/or the candidate sensing nodes,
wherein the capability information is used to indicate whether the source sensing node and/or the candidate sensing nodes have capability to ensure continuity of the sensing service.

17. The method of claim 16, further comprising:
sending a reporting request for the capability information to the source sensing node and/or the candidate sensing nodes.

18. A method for execution of sensing service, the method being performed by a sensing node and comprising:
sending first information to a first node,
wherein the first information is used to determine whether to switch the source sensing node to a target sensing node, the target sensing node is all or part of candidate sensing nodes, and the source sensing node and the target sensing node are configured to perform a sensing service on a first sensing target.

19. The method of claim 18, wherein the first node and the source sensing node are different nodes, and the sending the first information to the first node comprises:
sending first characteristic information or first measurement information to the first node,
wherein the first measurement information is used to generate the first characteristic information, and the first characteristic information is characteristic information of the first sensing target sensed by the source sensing node.

20. The method of claim 19, wherein the sending the first characteristic information or the first measurement information to the first node comprises:
receiving a first request from the first node, the first request being used to request that the source sensing node obtains the first measurement information; and
sending a first response to the first node, the first response comprising at least one of the first characteristic information or the first measurement information.

21. The method of 19 or 20, wherein the first characteristic information comprises at least one of the following:
translational characteristic of the sensing target;
radar cross-section (RCS) characteristic of the sensing target;
micro-motion characteristic of the sensing target; or
target imaging characteristic of the sensing target.

22. The method of claim 21, wherein the translational characteristic comprises at least one of position, velocity, acceleration, latency, or doppler shift, the RCS characteristic comprises reflected signal receive power, the micro-motion characteristic comprises micro-doppler characteristic, and the target imaging characteristic comprises target classification.

23. The method of any one of claims 18 to 22, further comprising:
reporting capability information to the first node,
wherein the capability information is used to indicate whether the source sensing node has capability to ensure continuity of the sensing service.

24. The method of claim 23, further comprising:
receiving a reporting request for the capability information from the first node.

25. A method for execution of sensing service, the method being performed by candidate sensing nodes and comprising:
sending first information to a first node,
wherein the first information is used to determine whether to switch a source sensing node to a target sensing node, the target sensing node is all or part of the candidate sensing nodes, and the source sensing node and the target sensing node are configured to perform a sensing service on a first sensing target.

26. The method of claim 25, wherein the sending the first information to the first node comprises:
sending to the first node at least one of second characteristic information, second measurement information or a matching result,
wherein the second measurement information is used to generate the second characteristic information, the second characteristic information is characteristic information of a sensing target sensed by the candidate sensing nodes, the matching result is a matching result between the first characteristic information and the second characteristic information, and the first characteristic information is characteristic information of the first sensing target sensed by the source sensing node.

27. The method of claim 26, wherein the sending the second characteristic information or the second measurement information to the first node comprises:
receiving a second request from the first node, the second request being used to request that the candidate sensing nodes obtain the second measurement information; and
sending a second response to the first node, the second response comprising at least one of the second characteristic information, the second measurement information, or the matching result.

28. The method of claim 26, further comprising:
receiving the first characteristic information or first measurement information from the first node,
wherein the first measurement information is used to generate the first characteristic information.

29. The method of claim 26 or 27, wherein the matching result comprises a first bit,
when the first bit takes a first value, it indicates that the first characteristic information matches the second characteristic information;
when the first bit takes a second value, it indicates that the first characteristic information and the second characteristic information do not match.

30. The method of claim 29, wherein the matching result comprises at least two bits, the at least two bits have at least three values, and each of the at least three values is used to indicate a matching probability between the first characteristic information and the second characteristic information.

31. The method of any one of claims 25 to 30, further comprising:
reporting capability information to the first node,
wherein the capability information is used to indicate whether the candidate sensing nodes have capability to ensure continuity of the sensing service.

32. The method of claim 31, further comprising:
receiving a reporting request for the capability information from the first node.

33. The method of any one of claims 25 to 32, wherein the second characteristic information comprises at least one of the following:
translational characteristic of the sensing target;
radar cross-section (RCS) characteristic of the sensing target;
micro-motion characteristic of the sensing target; or
target imaging characteristic of the sensing target.

34. The method of claim 33, wherein the translational characteristic comprises at least one of position, velocity, acceleration, latency, or doppler shift, the RCS characteristic comprises reflected signal receive power, the micro-motion characteristic comprises micro-doppler characteristic, and the target imaging characteristic comprises target classification.

35. An apparatus for execution of sensing service, comprising:
an obtaining module, configured to obtain first information from a source sensing node and/or candidate sensing nodes, wherein the first information is used to determine whether to switch the source sensing node to a target sensing node,
wherein the target sensing node is all or part of the candidate sensing nodes, and the source sensing node and the target sensing node are used to perform a sensing service on a first sensing target.

36. An apparatus for execution of sensing service, comprising:
a first sending module, configured to send first information to a first node,
wherein the first information is used to determine whether to switch the source sensing node to a target sensing node, the target sensing node is all or part of candidate sensing nodes, and the source sensing node and the target sensing node are configured to perform a sensing service on a first sensing target.

37. An apparatus for execution of sensing service, comprising:
a second sending module, configured to send first information to a first node,
wherein the first information is used to determine whether to switch a source sensing node to a target sensing node, the target sensing node is all or part of candidate sensing nodes, and the source sensing node and the target sensing node are configured to perform a sensing service on a first sensing target.

38. A sensing device, comprising a processor, and a memory for storing a computer program, wherein the processor executes the computer program to implement the method for execution of sensing service of any one of claims 1 to 17, or to implement the method for execution of sensing service of any one of claims 18 to 24, or to implement the method for execution of sensing service of any one of claims 25 to 34.

39. A computer readable storage medium, having stored therein a computer program, which is executed by a processor to implement the method for execution of sensing service of any one of claims 1 to 17, or to implement the method for execution of sensing service of any one of claims 18 to 24, or to implement the method for execution of sensing service of any one of claims 25 to 34.

40. A chip, comprising programmable logic circuitry and/or program instructions, wherein the chip, when running, is configured to implement the method for execution of sensing service of any one of claims 1 to 17, or to implement the method for execution of sensing service of any one of claims 18 to 24, or to implement the method for execution of sensing service of any one of claims 25 to 34.

41. A computer program product, comprising computer instructions stored in a computer readable storage medium, wherein a processor reads and executes the computer instructions from the computer readable storage medium to implement the method for execution of sensing service of any one of claims 1 to 17, or to implement the method for execution of sensing service of any one of claims 18 to 24, or to implement the method for execution of sensing service of any one of claims 25 to 34.
